# EUROPEAN PATENT APPLICATION

(11) **EP 4 459 926 A1**
(43) Date of publication of application: **06.11.2024**
(21) Application number: 23778253.7
(22) Date of filing: 28.03.2023
(51) Int. Cl.: H04L 9/40

(54) **COMMUNICATION METHOD, RELATED APPARATUS, AND RELATED SYSTEM**

(30) Priority: 31.03.2022 CN 202210336396
(71) Applicant: Huawei Technologies Co., Ltd., Shenzhen, Guangdong 518129 (CN)
(72) Inventor: LIN, Lin, Shenzhen, Guangdong 518129 (CN)
(74) Representative: Gill Jennings & Every LLP
(86) International application number: PCT/CN2023/084527
(87) International publication number: WO 2023/185888

(57) **Abstract**

A communication method, a related apparatus, and a related system are disclosed. The system includes: a first user equipment, a second user equipment, and an application server. The first user equipment provides device information of the first user equipment for the second user equipment, where the device information indicates that the first user equipment prepares to log in to a to-be-specified server. The second user equipment sends a first request message to the application server based on the device information, where the first request message is used to request to authorize the first user equipment to log in to the application server. The application server authorizes the first user equipment to log in to the application server and provides login indication information for the first user equipment. The first user equipment logs in to the application server based on the login indication information. In this manner, applications do not need to be installed on the first user equipment, and a user does not need to search for a login entry of each application to implement login. In this way, efficiency of logging in to an application is improved, and user experience is improved.

## Description

This application claims priority to Chinese Patent Application No. 202210336396.1, filed with the China National Intellectual Property Administration on March 31, 2022 and entitled "COMMUNICATION METHOD, RELATED APPARATUS, AND RELATED SYSTEM", which is incorporated herein by reference in its entirety.

### TECHNICAL FIELD

This application relates to the field of communication technologies, and in particular, to a communication method, a related apparatus, and a related system.

### BACKGROUND

Since smartphones are widely used, many scenarios, such as payment and download can be implemented by using applications (APPs) on mobile phones. A function of "triggering login between devices" may be further implemented by using a mobile phone APP. For example, a user may first enter an address of a website on a browser of a personal computer, and a login interface of the website presented by the browser includes a "QR code for login". The user scans the QR code for login by using an APP that is on a mobile phone and that has logged in to an application server associated with the website, so that the browser can log in to the website by using an account that has logged in to the APP.

However, in the existing solution for triggering login between devices, efficiency of a login operation performed by a user is low. A reason therefor includes but is not limited to: In addition to performing various operations on a mobile phone, the user needs to pre-enter an address of a to-be-logged-in website on a post-login device or start a corresponding APP in advance. When the post-login device (for example, a television) lacks a convenient input apparatus, user operations are particularly complex, seriously affecting user experience.

Therefore, how to improve operation efficiency of a user in the scenario of triggering login between devices and improve user experience is an urgent technical problem to be resolved.

### SUMMARY

Embodiments of this application provide a communication method, a related apparatus, and a related system, to improve operation efficiency of a user in a scenario of triggering login between devices, and improve user experience.

According to a first aspect, this application provides a communication system, including a first user equipment, a second user equipment, and an application server. The first user equipment is configured to provide device information of the first user equipment for the second user equipment, where the device information indicates that the first user equipment prepares to log in to a to-be-specified server.

The second user equipment is configured to send a first request message to the application server based on the device information, where the first request message is used to request to authorize the first user equipment to log in to the application server.

The application server is configured to generate login indication information in response to the first request message, and enable the first user equipment to receive the login indication information, where the login indication information indicates the first user equipment to log in to the application server.

The first user equipment is further configured to log in to the application server based on the login indication information.

In this embodiment of this application, if a user intends to authorize, based on a first APP on the second user equipment, the first user equipment to log in to an application server of an application server 103, there is no need to install the first APP on the first user equipment. When the second user equipment obtains the device information provided by the first user equipment, the second user equipment requests an application server of the first APP for login authorization. The application server authorizes the first user equipment to log in to the application server, and provides the login indication information for the first user equipment. The first user equipment initiates a login request to the application server based on the login indication information, to log in to the application server. When the first APP is not installed on the first user equipment, the first user equipment may access, based on a browser, a website corresponding to the first APP. This is the same for logging in to other applications. In this way, applications do not need to be installed on the first user equipment, and login entries of the applications do not need to be searched for. This manner can greatly improve operation efficiency of the user in the scenario of "triggering login between devices", and improve user experience, especially in cases in which the first user equipment lacks a convenient input apparatus and has poor interactivity, a user operation is complex, it is difficult for the user to find a login entry of each application on the first user equipment, and so on.

With reference to the first aspect, in some embodiments, the device information includes one or more of the following: a device identifier, where the device identifier identifies the first user equipment; check information, where the check information is generated by the first user equipment and is used to verify security of a source of the login indication information; and a communication address, where the communication address is an address used by the first user equipment to receive the login indication information.

The device identifier may be a device ID, for example, a device SN number. The communication address may be a MAC address or an IP address, an internal IP address + a port number, a public IP address + a port number, or may provide an internal IP address, an external IP address, and a port number. A communication manner may be TCP/IP, Bluetooth, NFC, or the like. The check information is a string of random numbers, and may be used to verify an identity of an interactive device.

With reference to the first aspect, in some embodiments, that the first user equipment is configured to provide device information of the first user equipment for the second user equipment includes: The first user equipment is configured to present the device information of the first user equipment as a QR code; and the second user equipment is configured to scan the QR code to obtain the device information of the first user equipment. A manner in which the first user equipment provides the device information of the first user equipment for the second user equipment is described herein. To be specific, the QR code is displayed, where the QR code carries the device information of the first user equipment. When the second user equipment scans and parses the QR code, the device information of the first user equipment can be obtained.

In addition to the QR code manner, the second user equipment may further obtain the device information of the first user equipment in wireless communication manners, for example, Bluetooth, NFC, Wi-Fi, and Wi-Fi Direct.

With reference to the first aspect, in some embodiments, that the first user equipment is configured to provide device information of the first user equipment for the second user equipment includes: The first user equipment is configured to send a message including the device information to the second user equipment.

In some embodiments, the message including the device information is a near field communication NFC message. A manner in which the first electronic device provides the device information of the first user equipment for the second user equipment in the NFC communication manner is shown herein.

With reference to the first aspect, in some embodiments, the login indication information includes login target information, and the login target information is information related to the application server.

In some embodiments, the login target information includes a login address of the application server, and that the first user equipment is further configured to log in to the application server based on the login indication information includes: The first user equipment is further configured to trigger a browser installed on the first user equipment to open the login address, to log in to the application server. Optionally, if a client application (first APP) of the application server is not installed on the first user equipment, the first user equipment opens the login address (URL) by using the browser; or if the first APP is installed on the first electronic device 101, the first user equipment may open the login address by using the browser based on a selection of the user.

In some embodiments, the login target information includes application information, the application information is a name or an identifier of a client application corresponding to the application server, and that the first user equipment is further configured to log in to the application server based on the login indication information includes: The first user equipment is further configured to trigger the client application installed on the first user equipment to log in to the application server. When the first APP is installed on the first electronic device 101, the first electronic device 101 may start the first APP based on the obtained application information (APP ID or APP Name).

With reference to the first aspect, in some embodiments, the login indication information further includes login credential information generated by the application server for the first user equipment, the login credential information includes information indicating that the application server authorizes the first user equipment to log in to the application server by using a target account, and the target account is an account used by the second user equipment to log in to the application server.

In some embodiments, the login credential information includes a universally unique identifier UUID and/or a token token having an association relationship with the target account. The first user equipment may obtain an application resource of the target account from the application server based on the login credential information.

In some embodiments, that the first user equipment is further configured to log in to the application server based on the login indication information includes: The first user equipment is further configured to send the login credential information to the application server; and the application server is further configured to send login success indication information to the first user equipment based on the login credential information.

With reference to the first aspect, in some embodiments, that the application server is configured to generate login indication information in response to the first request message, and enable the first user equipment to receive the login indication information includes: The application server is configured to generate the login indication information in response to the first request message, and send the login indication information to the first user equipment. It is described herein that the application server may directly send the login indication information to the first user equipment.

In some embodiments, the first request message includes a device identifier and a communication address, the device identifier identifies the first user equipment, and the communication address is an address used by the first user equipment to receive the login indication information, and indicates the application server to send the login indication information to the first user equipment. Because the second user equipment provides the communication address of the first user equipment for the application server, the application server may directly send the login credential information and a target login address to the first user equipment based on the communication address, improving interaction efficiency.

With reference to the first aspect, in some embodiments, that the application server is configured to generate login indication information in response to the first request message, and enable the first user equipment to receive the login indication information includes: The application server is configured to generate the login indication information in response to the first request message, and send the login indication information to the second user equipment; and the second user equipment is further configured to send the login indication information to the first user equipment. It is described herein that the application server may forward the login indication information to the first user equipment by using the second user equipment.

With reference to the first aspect, in some embodiments, the second user equipment is further configured to: before sending the first request message to the application server based on the device information, log in to the application server by using the target account. After the second user equipment logs in to the target account, the second user equipment obtains the login address provided by the application server.

With reference to the first aspect, in some embodiments, that the application server is configured to generate login indication information in response to the first request includes: The application server is configured to send an interface display element of an authorization confirmation interface to the second user equipment in response to the first request; the second user equipment is further configured to display the authorization confirmation interface; and the second user equipment is further configured to receive a confirmation instruction for the authorization confirmation interface, and send login authorization confirmation indication information to the application server in response to the confirmation instruction; and the application server is further configured to generate the login indication information based on the login authorization confirmation indication information. A process in which the second user equipment performs login authorization confirmation is described herein. To be specific, the second electronic device displays the authorization confirmation interface, and the application server can implement authorization only after the user confirms authorization, thereby improving security in the login authorization process.

With reference to the first aspect, in some embodiments, after the first user equipment is further configured to log in to the application server based on the login indication information, the application server is further configured to send, to the second user equipment, indication information indicating that the first user equipment successfully logs in to the application server by using the target account.

In some embodiments, the second user equipment is further configured to: after receiving the indication information sent by the application server, present prompt information, where the prompt information indicates that the first user equipment successfully logs in to the application server by using the target account. In this way, the user using the second user equipment is prompted about an authorization status of the target account for logging in to the application server 103 on the first user equipment.

According to a second aspect, this application provides a communication method, including: A first user equipment provides device information of the first user equipment for a second user equipment, where the device information indicates that the first user equipment prepares to log in to a to-be-specified server; the first user equipment receives login indication information, where the login indication information indicates the first user equipment to log in to an application server that is specified by a user by using the second user equipment; and the first user equipment logs in to the application server based on the login indication information.

In this embodiment of this application, if a user intends to authorize, based on a first APP on the second user equipment, the first user equipment to log in to an application server of an application server 103, there is no need to install the first APP on the first user equipment. The first user equipment may provide the device information of the first user to the second user equipment. The second user equipment requests an application server of the first APP for login authorization. The application server authorizes the first user equipment to log in to the application server, and provides the login indication information for the first user equipment. The first user equipment initiates a login request to the application server based on the login indication information, to log in to the application server. When the first APP is not installed on the first user equipment, the first user equipment may access, based on a browser, a website corresponding to the first APP. This is the same for logging in to other applications. In this way, applications do not need to be installed on the first user equipment, and login entries of the applications do not need to be searched for. This manner can greatly improve operation efficiency of the user in the scenario of "triggering login between devices", and improve user experience, especially in cases in which the first user equipment lacks a convenient input apparatus and has poor interactivity, a user operation is complex, it is difficult for the user to find a login entry of each application on the first user equipment, and so on.

With reference to the second aspect, in some embodiments, the device information includes one or more of the following: a device identifier, where the device identifier identifies the first user equipment; check information, where the check information is generated by the first user equipment and is used to verify security of a source of the login indication information; and a communication address, where the communication address is an address used by the first user equipment to receive the login indication information.

The device identifier may be a device ID, for example, a device SN number. The communication address may be a MAC address or an IP address, an internal IP address + a port number, a public IP address + a port number, or may provide an internal IP address, an external IP address, and a port number. A communication manner may be TCP/IP, Bluetooth, NFC, or the like. The check information is a string of random numbers, and may be used to verify an identity of an interactive device.

With reference to the second aspect, in some embodiments, that a first user equipment provides device information for a second user equipment includes: The first user equipment presents the device information as a QR code for the second user equipment to scan, where the QR code includes the device information; or the first user equipment sends a message including the device information to the second user equipment. A manner in which the first user equipment provides the device information of the first user equipment for the second user equipment is described herein. To be specific, the QR code is displayed, where the QR code carries the device information of the first user equipment. When the second user equipment scans and parses the QR code, the device information of the first user equipment can be obtained. In addition to the QR code manner, the second user equipment may further obtain the device information of the first user equipment in wireless communication manners, for example, Bluetooth, NFC, Wi-Fi, and Wi-Fi Direct.

In some embodiments, the message including the device information is a near field communication NFC message. A manner in which the first electronic device provides the device information of the first user equipment for the second user equipment in the NFC communication manner is shown herein.

With reference to the second aspect, in some embodiments, the login indication information includes login target information, and the login target information is information related to the application server.

In some embodiments, the login target information includes a login address of the application server, and that the first user equipment logs in to the application server based on the login indication information includes: The first user equipment triggers a browser installed on the first user equipment to open the login address, to log in to the application server. Optionally, if a client application (first APP) of the application server is not installed on the first user equipment, the first user equipment opens the login address (URL) by using the browser; or if the first APP is installed on the first electronic device 101, the first user equipment may open the login address by using the browser based on a selection of the user.

In some embodiments, the login target information includes application information, the application information is a name or an identifier of the client application corresponding to the application server, and that the first user equipment logs in to the application server based on the login indication information includes: The first user equipment triggers the client application installed on the first user equipment to log in to the application server. When the first APP is installed on the first electronic device 101, the first electronic device 101 may start the first APP based on the obtained application information (APP ID or APP Name).

With reference to the second aspect, in some embodiments, the login indication information further includes login credential information generated by the application server for the first user equipment, the login credential information includes information indicating that the application server authorizes the first user equipment to log in to the application server by using a target account, and the target account is an account used by the second user equipment to log in to the application server.

In some embodiments, the login credential information includes a universally unique identifier UUID and/or a token token having an association relationship with the target account. The first user equipment may obtain an application resource of the target account from the application server based on the login credential information.

In some embodiments, that the first user equipment logs in to the application server based on the login indication information includes: The first user equipment sends the login credential information to the application server, and logs in to the application server based on the login credential information.

With reference to the second aspect, in some embodiments, that the first user equipment receives login indication information includes: The first user equipment receives the login indication information from the second user equipment; or the first user equipment receives the login indication information from the application server. It is described herein that the application server may directly send the login indication information to the first user equipment, or may forward the login indication information to the first user equipment by using the second user equipment.

According to a third aspect, this application provides a communication method, including: A second user equipment obtains device information of a first user equipment, where the device information indicates that the first user equipment prepares to log in to a to-be-specified server; and the second user equipment triggers, based on the device information, the first user equipment to receive login indication information, where the login indication information indicates the first user equipment to log in to an application server that is specified by a user by using the second user equipment.

In this embodiment of this application, if a user intends to authorize, based on a first APP on the second user equipment, the first user equipment to log in to an application server of an application server 103, there is no need to install the first APP on the first user equipment. When the second user equipment obtains the device information provided by the first user equipment, the second user equipment requests an application server of the first APP for login authorization. The application server authorizes the first user equipment to log in to the application server, and provides the login indication information for the first user equipment. The first user equipment initiates a login request to the application server based on the login indication information, to log in to the application server. When the first APP is not installed on the first user equipment, the first user equipment may access, based on a browser, a website corresponding to the first APP. This is the same for logging in to other applications. In this way, applications do not need to be installed on the first user equipment, and login entries of the applications do not need to be searched for. This manner can greatly improve operation efficiency of the user in the scenario of "triggering login between devices", and improve user experience, especially in cases in which the first user equipment lacks a convenient input apparatus and has poor interactivity, a user operation is complex, it is difficult for the user to find a login entry of each application on the first user equipment, and so on.

With reference to the third aspect, in some embodiments, the device information includes one or more of the following: a device identifier, where the device identifier identifies the first user equipment; check information, where the check information is generated by the first user equipment and is used to verify security of a source of the login indication information; and a communication address, where the communication address is an address used by the first user equipment to receive the login indication information.

The device identifier may be a device ID, for example, a device SN number. The communication address may be a MAC address or an IP address, an internal IP address + a port number, a public IP address + a port number, or may provide an internal IP address, an external IP address, and a port number. A communication manner may be TCP/IP, Bluetooth, NFC, or the like. The check information is a string of random numbers, and may be used to verify an identity of an interactive device.

With reference to the third aspect, in some embodiments, the device information includes a device identifier and a communication address, and that the second user equipment triggers, based on the device information, the first user equipment to receive login indication information includes: The second user equipment sends a first request message to the application server, where the first request message is used to request to authorize the first user equipment to log in to the application server, the first request message includes the device identifier and the communication address, the device identifier identifies the first user equipment, and the communication address is an address for the first user equipment to receive the login indication information, and indicates the application server to send the login indication information to the first user equipment. It is described herein that the application server may directly send the login indication information to the first user equipment. Because the second user equipment provides the communication address of the first user equipment for the application server, the application server may directly send the login credential information and a target login address to the first user equipment based on the communication address, improving interaction efficiency.

With reference to the third aspect, in some embodiments, the device information includes a device identifier and a communication address, and that the second user equipment triggers, based on the device information, the first user equipment to receive login indication information includes: The second user equipment sends a first request message to the application server, where the first request message includes the device identifier, and the device identifier identifies the first user equipment; the second user equipment receives the login indication information that is sent by the application server in response to the first request message; and the second user equipment sends the login indication information to the first user equipment based on the communication address. It is described herein that the application server may forward the login indication information to the first user equipment by using the second user equipment.

With reference to the third aspect, in some embodiments, that the second user equipment obtains device information of a first user equipment includes: The second user equipment receives a message that is sent by the first user equipment and that includes the device information; or the second user equipment scans a QR code presented by the first user equipment, where information carried in the QR code includes the device information. A manner in which the first user equipment provides the device information of the first user equipment for the second user equipment is described herein. To be specific, the QR code is displayed, where the QR code carries the device information of the first user equipment. When the second user equipment scans and parses the QR code, the device information of the first user equipment can be obtained. In addition to the QR code manner, the second user equipment may further obtain the device information of the first user equipment in wireless communication manners, for example, Bluetooth, NFC, Wi-Fi, and Wi-Fi Direct.

In some embodiments, the message including the device information is an NFC message. A manner in which the first electronic device provides the device information of the first user equipment for the second user equipment in the NFC communication manner is shown herein.

With reference to the third aspect, in some embodiments, the login indication information includes login target information, and the login target information is information related to the application server.

In some embodiments, the login target information includes a login address of the application server; or the login target information includes a login address of the application server or application information, where the application information is a name or an identifier of a client application corresponding to the application server. Optionally, if the client application (first APP) of the application server is not installed on the first user equipment, the first user equipment may open the login address (URL) by using the browser; or if the first APP is installed on the first electronic device 101, the first user equipment may open the login address by using the browser based on a selection of the user. When the first APP is installed on the first electronic device 101, the first electronic device 101 may also start the first APP based on the obtained application information (APP ID or APP Name).

With reference to the third aspect, in some embodiments, the login indication information further includes login credential information generated by the application server for the first user equipment, the login credential information includes information indicating that the application server authorizes the first user equipment to log in to the application server by using a target account, and the target account is an account used by the second user equipment to log in to the application server.

In some embodiments, the login credential information includes a universally unique identifier UUID and/or a token token having an association relationship with the target account. The first user equipment may obtain an application resource of the target account from the application server based on the login credential information.

With reference to the third aspect, in some embodiments, the method further includes: The second user equipment receives indication information that is sent by the application server and that indicates that the first user equipment successfully logs in to the application server.

In some embodiments, after the second user equipment receives indication information that is sent by the application server and that indicates that the first user equipment successfully logs in to the application server, the method further includes: The second user equipment presents prompt information, where the prompt information indicates that the first user equipment successfully logs in to the application server by using the target account. In this way, the user using the second user equipment is prompted about an authorization status of the target account for logging in to the application server 103 on the first user equipment.

With reference to the third aspect, in some embodiments, that the second user equipment triggers the first user equipment to receive login indication information includes: The second user equipment obtains a login address that is of the application server and that is entered by the user; and the second user equipment sends the login indication information to the first user equipment, where the login indication information includes the login address. It is described herein that the login address of the application server may be specified by the user.

According to a fourth aspect, this application provides a communication method, including: An application server receives a first request message sent by a second user equipment, where the first request message is used to request to authorize a first user equipment to log in to the application server; the application server generates login indication information in response to the first request message, and enables the first user equipment to receive the login indication information, where the login indication information indicates the first user equipment to log in to the application server; the application server receives a login request that is sent by the first user equipment based on the login indication information; and the application server sends login success indication information to the first user equipment based on the login request.

In this embodiment of this application, if a user intends to authorize, based on a first APP on the second user equipment, the first user equipment to log in to an application server of an application server 103, there is no need to install the first APP on the first user equipment. When the second user equipment obtains the device information provided by the first user equipment, the second user equipment requests an application server of the first APP for login authorization. The application server authorizes the first user equipment to log in to the application server, and provides the login indication information for the first user equipment. The first user equipment initiates a login request to the application server based on the login indication information, to log in to the application server. When the first APP is not installed on the first user equipment, the first user equipment may access, based on a browser, a website corresponding to the first APP. This is the same for logging in to other applications. In this way, applications do not need to be installed on the first user equipment, and login entries of the applications do not need to be searched for. This manner can greatly improve operation efficiency of the user in the scenario of "triggering login between devices", and improve user experience, especially in cases in which the first user equipment lacks a convenient input apparatus and has poor interactivity, a user operation is complex, it is difficult for the user to find a login entry of each application on the first user equipment, and so on.

With reference to the fourth aspect, in some embodiments, the login indication information includes login target information, and the login target information is information related to the application server.

In some embodiments, the login target information includes a login address of the application server; or the login target information includes application information, where the application information is a name or an identifier of a client application corresponding to the application server. Optionally, if the client application (first APP) of the application server is not installed on the first user equipment, the first user equipment may open the login address (URL) by using the browser; or if the first APP is installed on the first electronic device 101, the first user equipment may open the login address by using the browser based on a selection of the user. When the first APP is installed on the first electronic device 101, the first electronic device 101 may also start the first APP based on the obtained application information (APP ID or APP Name).

With reference to the fourth aspect, in some embodiments, the login indication information further includes login credential information generated by the application server for the first user equipment, the login credential information includes information indicating that the application server authorizes the first user equipment to log in to the application server by using a target account, and the target account is an account used by the second user equipment to log in to the application server.

In some embodiments, the login credential information includes a universally unique identifier UUID and/or a token token having an association relationship with the target account. The first user equipment may obtain an application resource of the target account from the application server based on the login credential information.

With reference to the fourth aspect, in some embodiments, that the application server generates login indication information in response to the first request message, and enables the first user equipment to receive the login indication information includes: The application server generates the login indication information in response to the first request message, and sends the login indication information to the first user equipment.

In some embodiments, the first request message includes a device identifier and a communication address, the device identifier identifies the first user equipment, and the communication address is an address used by the first user equipment to receive the login indication information, and indicates the application server to send the login indication information to the first user equipment. It is described herein that the application server may directly send the login indication information to the first user equipment. Because the second user equipment provides the communication address of the first user equipment for the application server, the application server may directly send the login credential information and a target login address to the first user equipment based on the communication address, improving interaction efficiency.

With reference to the fourth aspect, in some embodiments, that the application server generates login indication information in response to the first request message, and enables the first user equipment to receive the login indication information includes: The application server generates the login indication information in response to the first request message, and sends the login indication information to the second user equipment, so that the second user equipment sends the login indication information to the first user equipment. It is described herein that the application server may forward the login indication information to the first user equipment by using the second user equipment.

With reference to the fourth aspect, in some embodiments, the method further includes: The application server sends, to the second user equipment, indication information indicating that the first user equipment successfully logs in to the application server.

According to a fifth aspect, this application provides a user equipment. The user equipment includes:
a transceiver unit, configured to provide device information for another user equipment, where the device information indicates that the user equipment prepares to log in to a to-be-specified server; and
the transceiver unit is further configured to receive login indication information, where the login indication information indicates the user equipment to log in to an application server that is specified by a user by using the another user equipment; and
a processing unit, configured to log in to the application server based on the login indication information.

According to a sixth aspect, this application provides a user equipment. The user equipment includes:
a transceiver unit, configured to obtain device information provided by another user equipment, where the device information indicates that the another user equipment prepares to log in to a to-be-specified server; and
a processing unit, configured to trigger, based on the device information, the another user equipment to receive login indication information, where the login indication information indicates the another user equipment to log in to an application server that is specified by a user by using the user equipment.

According to a seventh aspect, this application provides an application server. The application server includes:
a transceiver unit, configured to receive a first request message sent by a second user equipment, where the first request message is used to request to authorize a first user equipment to log in to the application server; and
a processing unit, configured to generate, by the application server, login indication information in response to the first request message, and enable the first user equipment to receive the login indication information, where the login indication information indicates the first user equipment to log in to the application server; and
the transceiver unit is further configured to receive a login request that is sent by the first user equipment based on the login indication information; and
the transceiver unit is further configured to send login success indication information to the first user equipment based on the login request.

According to an eighth aspect, this application provides a user equipment. The user equipment may include: one or more processors, a memory, and a display. The memory and the display are coupled to the one or more processors. The memory is configured to store computer program code, and the computer program code includes computer instructions. The one or more processors invoke the computer instructions to enable an electronic device to perform the method performed in any embodiment of the second aspect or the third aspect.

According to a ninth aspect, this application provides an application server. The application server may include one or more processors and a memory. The memory is coupled to the one or more processors. The memory is configured to store computer program code, and the computer program code includes computer instructions. The one or more processors invoke the computer instructions to enable an electronic device to perform the method performed in the embodiment of the fourth aspect.

According to a tenth aspect, an embodiment of this application provides a computer-readable storage medium, including computer instructions. When the computer instructions are run on an electronic device, the electronic device is enabled to perform the communication method provided in any embodiment of the second aspect, the third aspect, or the fourth aspect of embodiments of this application.

According to an eleventh aspect, an embodiment of this application provides a computer program product. When the computer program product runs on an electronic device, the electronic device is enabled to perform the communication method provided in any embodiment of the second aspect, the third aspect, or the fourth aspect of embodiments of this application.

### BRIEF DESCRIPTION OF DRAWINGS

FIG. 1 is a diagram of a system architecture according to an embodiment of this application;
FIG. 2 is a schematic flowchart of a communication method according to an embodiment of this application;
FIG. 3 is a diagram of a software architecture according to an embodiment of this application;
FIG. 4 and FIG. 5 are diagrams of a group of application interfaces according to an embodiment of this application;
FIG. 6a to FIG. 6f are diagrams of another group of application interfaces according to an embodiment of this application;
FIG. 7a to FIG. 7c are diagrams of another group of application interfaces according to an embodiment of this application;
FIG. 8a to FIG. 8f are diagrams of another group of application interfaces according to an embodiment of this application;
FIG. 9 is a diagram of another group of application interfaces according to an embodiment of this application;
FIG. 10A and FIG. 10B are a schematic flowchart of another communication method according to an embodiment of this application;
FIG. 11A and FIG. 11B are a schematic flowchart of another communication method according to an embodiment of this application;
FIG. 12 is a schematic flowchart of another communication method according to an embodiment of this application;
FIG. 13a to FIG. 13c each are a diagram of a structure of a device according to an embodiment of this application; and
FIG. 14 is a diagram of a structure of a communication apparatus according to an embodiment of this application.

### DESCRIPTION OF EMBODIMENTS

The following describes technical solutions in embodiments of this application with reference to accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more. Orientations or positional relationships indicated by the terms "middle", "left", "right", "up", "down", and the like are orientations or positional relationships shown based on the accompanying drawings, and are merely for ease of describing this application and simplifying description, rather than indicate or imply that an indicated apparatus or component needs to have a specific orientation and be constructed and operated in the specific orientation, and therefore cannot be understood as a limitation on this application.

The following first describes an example of an electronic device 100 provided in the following embodiments of this application.

The electronic device 100 in embodiments of this application may be a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a virtual reality device, a PDA (Personal Digital Assistant, personal digital assistant, also referred to as a palmtop computer), a portable Internet device, a data storage device, a smart television, a smart home device (for example, a smart sound, a smart air conditioner, or a smart refrigerator), a wearable device (for example, a wireless headset, a smart watch, a smart band, smart glasses, a head-mounted device (Head-mounted display, HMD), electronic clothing, an electronic bracelet, an electronic necklace, an electronic accessory, an electronic tattoo, or a smart mirror), an in-vehicle infotainment, an in-vehicle terminal (for example, a smart screen, an in-vehicle camera, or a display screen), or the like.

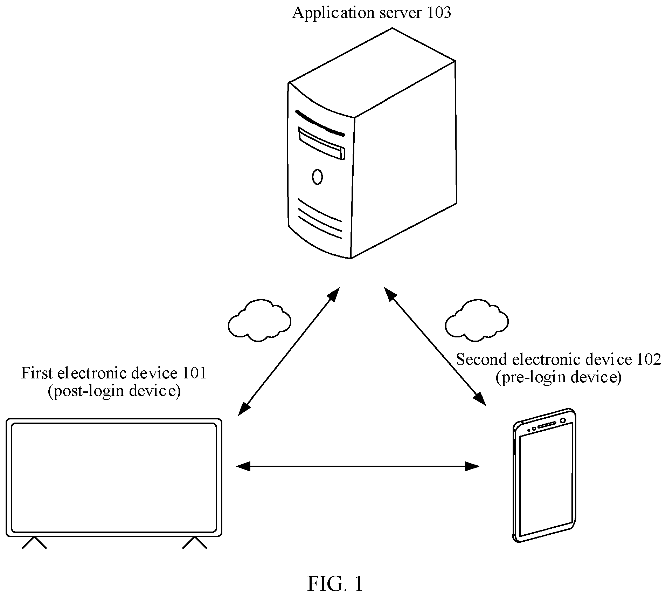

FIG. 1 is a diagram of an architecture of a communication system 10 according to this application. The communication system 10 may include a first electronic device 101, a second electronic device 102, and an application server 103.

The first electronic device 101 is a device that logs in to an application server (for example, the application server 103) later.

The second electronic device 102 has installed and logged in to an application (for example, a first APP), and logs in to a corresponding application server (application server 103) earlier than the first electronic device.

The first electronic device 101 and the second electronic device 102 may establish a connection and communicate with each other through Bluetooth (Bluetooth, BT), near field communication (near field communication, NFC), wireless fidelity (wireless fidelity, Wi-Fi), Wi-Fi Direct, or in other manners.

The application server 103 is configured to provide a login check function for an application (for example, the first APP), and provides application layer service functions such as a video service function, an XX music service function, and a social service function for the application after the login succeeds.

In some application scenarios, when the first electronic device 101 needs to log in to an application server, for example, the application server 103, the first electronic device 101 may log in to the application server under triggering of the second electronic device 102 that has logged in to the application server. For example, the first electronic device 101 starts the first APP and displays a QR code of the first APP, where the QR code is used to trigger the first electronic device 101 to log in to the application server 103. A user scans the QR code by using the first APP on the second electronic device 102 that has logged in to the application server 103. After confirmation of the user, the first electronic device 101 may log in to the application server 103 as an account on the second electronic device 102 that has logged in to the application server 103, and use a function of the application server 103.

In this embodiment of this application, the first electronic device 101 may also be referred to as a first user equipment, and the second electronic device 102 may also be referred to as a second user equipment.

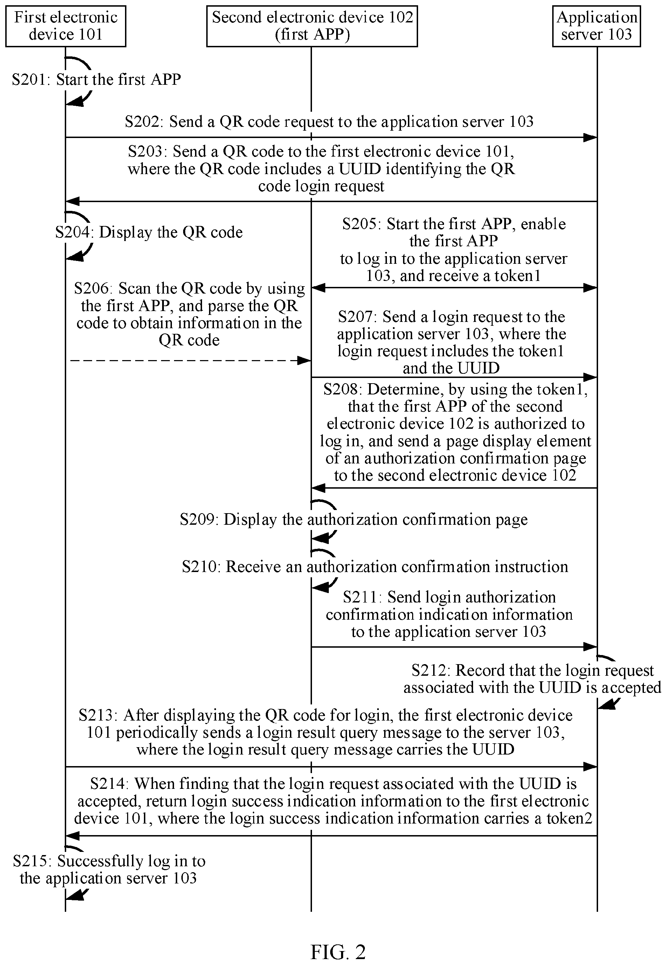

FIG. 2 shows a specific procedure of a communication method in the application scenario.

Step S201: The first electronic device 101 starts the first APP.

In this case, the first electronic device 101 has not logged in to the application server 103.

Step S202: The first electronic device 101 sends a QR code request to the application server 103, where the QR code request is used to request to obtain the QR code.

A uniform resource locator (Uniform Resource Locator, URL) of the application server 103 is built in the first APP, and is also referred to as an address of the application server 103. The QR code is used to obtain login user information for login authorization.

In some embodiments, after the first electronic device 101 starts the first APP, when the first electronic device 101 receives a login instruction, the first electronic device 101 sends the QR code request to the application server 103 in response to the login instruction.

Step S203: In response to the QR code request, the application server 103 sends the QR code to the first electronic device 101, where the QR code includes a universally unique identifier (Universally Unique Identifier, UUID).

The UUID is numbers generated for a device to identify the device. For example, the UUID may be formed by a group of 32-bit hexadecimal numbers, and may include a current date and time (where a first part of the UUID is related to time; and if another UUID is generated after several seconds since a UUID is generated, first parts of the UUIDs are different, and the rest parts of the UUIDs are the same), a clock sequence, and a globally unique IEEE machine recognition number (which is obtained from a media access control (Media Access Control, MAC) address of a network adapter if there is the network adapter, or is obtained in another manner if there is no network adapter).

The application server 103 receives the QR code request sent by the first electronic device 101, to generate the UUID. The application server 103 includes the UUID in the QR code, and sends the QR code to the first electronic device 101. The UUID may be used for subsequent identity check, identity identification, and the like.

Step S204: The first electronic device 101 displays the QR code.

Step S205: The second electronic device 102 starts the first APP and enables the first APP to log in to the application server 103, and the second electronic device 102 receives a token1 provided by the application server 103.

The second electronic device 102 logs in to the application server 103 based on registered user information (for example, an account and a password).

In some embodiments, the second electronic device 102 starts the first APP, and enters the account and the password. The second electronic device 102 sends a login request to the application server 103, where the login request includes the entered account and password. After receiving the login request, the application server 103 checks the account and the password. After the check succeeds, the application server 103 sends a login success message to the second electronic device 102, generates the token1 based on the user information, login time, device information of the second electronic device 102, and the like, and includes the token1 in the login success message. After receiving the login success message, the second electronic device 102 stores the token1, where the token1 is used as an identity credential for subsequent interaction for accessing the application server 103.

The token means "token", and is a character string generated by the server as an identifier for a client to send a request. The token is generated, encrypted, and signed by the application server, and cannot be parsed or modified by the client and a third party. The application server may use the token to check whether a subsequent request is initiated by a valid login user, and parse the token to obtain the user information or session ID information for corresponding service processing.

In some embodiments, the first APP started by the second electronic device 102 and the first APP started by the first electronic device 101 may be applications of different versions. For example, if the second electronic device 102 is a mobile phone, the first APP of a mobile phone version is installed on the second electronic device 102; and if the first electronic device 101 is a television, the first APP of a television version is installed on the first electronic device 102. The APPs of the two versions may be both referred to as first APPs.

Step S206: The second electronic device 102 scans, by using the first APP, the QR code displayed on the first electronic device 101, and parses the QR code to obtain information in the QR code.

The second electronic device 102 has successfully logged in to the application server 103. The second electronic device 102 obtains the information in the QR code through parsing, where the information includes UUID information.

Step S207: After obtaining the information in the QR code through parsing, the second electronic device 102 sends a login request to the application server 103, where the login request includes the token1 of the first APP and the UUID obtained by parsing the QR code.

The token1 is obtained from the application server 103 when the second electronic device 102 logs in to the application server 103, and is used for identity authentication during interaction between the first APP of the second electronic device 102 and the application server 103. After scanning, by using the first APP, the QR code displayed on the first electronic device 101, the second electronic device 102 sends the login request to the application server 103, where the login request includes the token1 of the first APP and the UUID obtained by parsing the QR code, the login request is used to request authorization to log in to the application server 103 on the first electronic device 101 by using a target account, and the target account is an account used by the second electronic device 102 to log in to the application server 103.

Step S208: The application server 103 determines, by using the token1, that the first APP of the second electronic device 102 is authorized to log in, and then the application server 103 sends an interface display element of an authorization confirmation interface to the second electronic device 102. The authorization confirmation interface is used to confirm with the second electronic device 102 whether to authorize login to the application server 103 on the first electronic device 101 by using the target account.

Step S209: The second electronic device 102 displays the authorization confirmation interface.

Step S210: The second electronic device 102 receives an authorization confirmation instruction for the authorization confirmation interface.

Step S211: The second electronic device 102 sends login authorization confirmation indication information to the application server 103.

Step S212: After receiving the login authorization confirmation indication information, the application server 103 records that the login request associated with the UUID is accepted.

The login request received by the application server 103 in step S207 includes the UUID obtained by parsing the QR code. After receiving the login authorization confirmation indication information, the application server 103 records that the login request associated with the UUID is accepted. The login request is used to request authorization to log in to the application server 103 on the first electronic device 101 by using the target account. In other words, the application server 103 records user login information corresponding to the UUID as the target account, that is, the account used by the second electronic device 102 to log in to the application server 103.

Step S213: After displaying the QR code, the first electronic device 101 periodically sends a login result query message to the application server 103, where the login result query message carries the UUID.

Step S214: When finding that the login request associated with the UUID is accepted, the application server 103 returns login success indication information to the first electronic device 101, where the login success indication information carries a token2.

Step S215: The first electronic device 101 successfully logs in to the application server 103. When needing to interact with the application server 103 subsequently, the first electronic device 101 may prove the real identity of the first electronic device 101 by including the token2.

In the foregoing manner, when the second electronic device 102 successfully logs in to the application server 103, if the user intends to perform code scanning on the first electronic device 101 by using the second electronic device 102 to authorize login to the application server 103, the user needs to install and start the first APP (or open a corresponding web page) on the first electronic device 101, and find a login entry for authorized login through code scanning. This is the same for logging in to other applications. The user also needs to install applications to be logged in to (or open corresponding web pages) on the first electronic device 101, and finds login entries of the applications for authorized login through code scanning. For an electronic device (for example, a television) with poor human-machine interaction, it is difficult to perform such operations. This login manner causes low efficiency and poor user experience.

An embodiment of this application provides a communication method. When the second electronic device 102 successfully logs in to the application server 103, if the user intends to authorize login to the application server 103 on the first electronic device 101 based on the user login information (target account) of the second electronic device 102, there is no need to install the first APP on the first electronic device 101. When the second electronic device 102 obtains device information provided by the first electronic device 101, the second electronic device 102 requests login authorization from the application server 103. The application server 103 authorizes the first electronic device 101 to log into the application server 103 by using the target account, and provides a target login address for the first electronic device 101. The first electronic device 101 initiates the login request to the application server 103 based on the target login address, to display a login success interface. When the first APP is not installed on the first electronic device 101, the first electronic device 101 may display a website corresponding to the first APP, and log in to the application server 103 by using the target account. This is the same for logging into other applications. In this way, applications do not need to be installed on the first electronic device 101, and login entries of the applications do not need to be searched for. This manner can greatly improve operation efficiency of the user in the scenario of "triggering login between devices", and improve user experience, especially in cases in which the first user equipment lacks a convenient input apparatus and has poor interactivity, a user operation is complex, it is difficult for the user to find a login entry of each application on the first user equipment, and so on.

With reference to a software structure of the first electronic device 101, the following describes a technical principle of a communication method provided in an embodiment of this application.

Based on the foregoing hardware structure of the foregoing electronic device 100, in this embodiment of this application, a software system of the first electronic device 101 may use a layered architecture, an event-driven architecture, a microcore architecture, a microservice architecture, or a cloud architecture. In this embodiment of this application, the software structure of the first electronic device 101 is described by using an Android system with a layered architecture as an example. The Android system is merely a system example of the first electronic device 101 in this embodiment of this application. This application may be further applicable to other types of operating systems, such as iOS, Windows, and HarmonyOS. This is not limited in this application. In the following description, the Android system is merely used as an example of an operating system of the first electronic device 101.

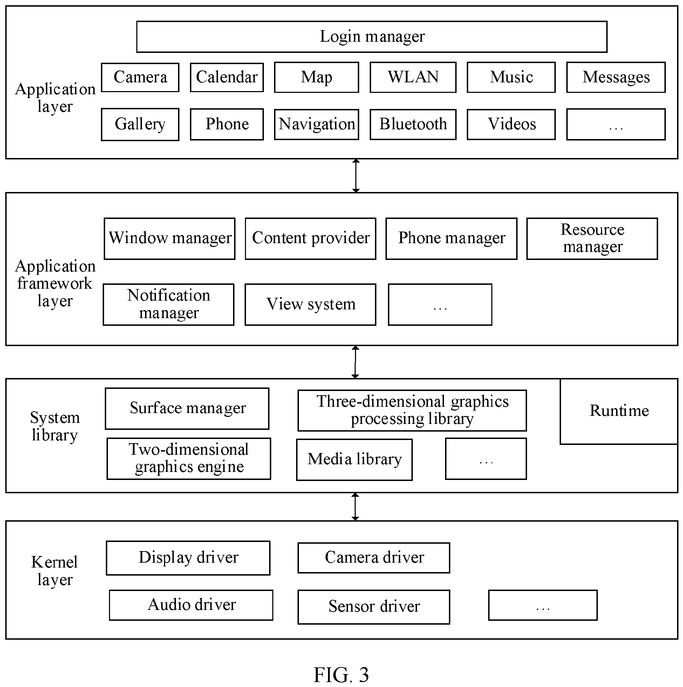

FIG. 3 is an example of a block diagram of a software structure of the first electronic device 101 according to an embodiment of this application.

For example, a software architecture of the first electronic device 101 is divided into four layers: an application layer, an application framework layer, a system library, and a kernel layer from top to bottom. The following describes the application layer.

As shown in FIG. 3, the application layer may generally include applications (Applications, APPs) such as Camera, Gallery, Calendar, Phone, Map, Navigation, WLAN, Bluetooth, XX music, Videos, and Messages. In this embodiment of this application, the application layer may further include a login manager. The login manager may provide the device information of the first electronic device 101 for the second electronic device 102, where the device information indicates that the first electronic device 101 has prepared to log in to a server to be specified by the user by using the second electronic device 102. In other words, the first electronic device has prepared computer resources for logging in to the to-be-specified server. Therefore, the device information may also be referred to as login requirement information, indicating that the first electronic device 101 needs to log in to a to-be-specified server.

In some embodiments, the login manager may provide the device information based on an NFC message.

In some embodiments, the login manager may provide the device information based on a QR code. The user may scan, by using a logged-in application on the second electronic device 102, the QR code displayed by the login manager, so that the first electronic device 101 can log in to a corresponding application server as a logged-in user of the second electronic device 102, and use an application function on the application server.

It may be understood that the login manager may be an application (APP) installed by the user, or may be an application (APP) installed by a system by default.

In some embodiments, the login manager may alternatively be a function, namely, a subprogram, in an application.

In some embodiments, the login manager may alternatively be a built-in function of the browser. For example, the user enters a specific website address in the browser of the first electronic device 101, and starts the login manager on a displayed web page.

In this embodiment of this application, the login manager installed on the first electronic device 101 provides a general function of triggering login between devices. When the second electronic device 102 obtains device information or the login requirement information of the first electronic device 101 by using the first APP, the second electronic device 102 requests login authorization from the application server 103, and the application server 103 sends, to the first electronic device 101 or the second electronic device 102, information required for logging in to the application server 103. When the first APP is not installed on the first electronic device 101, the first electronic device 101 may log into the application server 103 by using the browser. When the first APP is installed on the first electronic device 101, the first electronic device 101 may log into the application server 103 by using the first APP. Similarly, when the user logs in to another application server by using another application on the second electronic device 102, the first electronic device 101 may also be triggered to log in to the another application server by using the another application or log in to the another application server by using the browser. Details are not described again.

The following describes in detail the communication method in embodiments of this application. An example in which the first electronic device 101 is a television and the second electronic device 102 is a mobile phone is used.

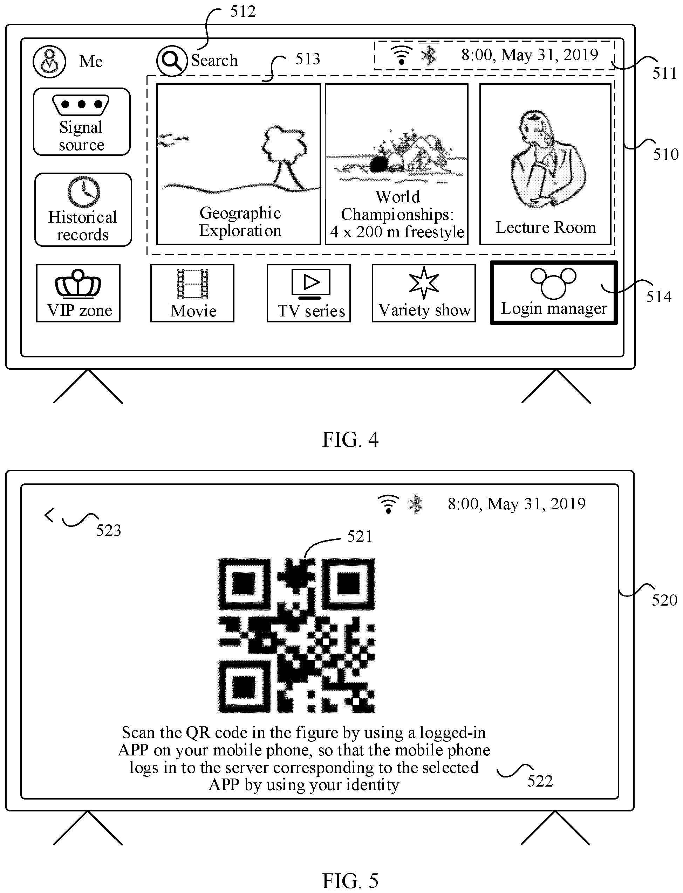

FIG. 4 and FIG. 5 show a user interface for starting the login manager of the first electronic device 101.

FIG. 4 shows an example of a home screen 510 of the first electronic device 101. The home screen 510 may include a status bar 511, a search control 512, a content recommendation area 513, and one or more function icons (including a login manager icon 514).

The status bar 201 may include one or more signal strength indicators of a mobile communication signal (which may also be referred to as a cellular signal), one or more signal strength indicators of a Wi-Fi signal, a Bluetooth indicator, and a time indicator.

The search control 512 is configured to receive a search keyword entered by the user, and the first electronic device 101 searches for, based on the search keyword, a video/information related to the search keyword.

The content recommendation area 513 is used to display one or more video viewing entries or information viewing entries, for example, Geographic Exploration and Lecture Room shown in FIG. 4.

The one or more function icons provide different functions, such as selecting a signal source, viewing historical records, accessing a VIP zone channel, accessing a movie channel, accessing a TV series channel, accessing a variety show channel, and starting the login manager.

When the first electronic device 101 detects a user operation on the login manager icon 514, the first electronic device 101 presents a corresponding login management interface.

FIG. 5 shows an example of a login management interface 520. The login management interface 520 includes a QR code 521, prompt information 522, and a return control 523.

The QR code 521 is used for scanning by another electronic device, to trigger the first electronic device 101 to log in to an application server or a website that is specified by the user by using the another electronic device.

The QR code 521 may be a static QR code, or may be a dynamic QR code. The former means that information or parameters included in QR codes presented at different time points are the same, and the latter means that information or parameters included in QR codes presented at different time points are different. For example, the first electronic device may generate different check codes at different time points, and encode the check codes into the QR code 521, to determine that a device that provides information required for login to the first electronic device is the same as or related to a device that scans the QR code 521. For details, refer to subsequent embodiments of this application.

The prompt information 522 is used to prompt the user of a function of the QR code 521, for example, "Scan the QR code in the figure by using a logged-in APP on your mobile phone, so that the mobile phone logs in to the server corresponding to the selected APP by using your identity".

The return control 523 is configured to manually return to a previous-level interface. For example, when the first electronic device 101 detects a user operation on the return control 523, the first electronic device 101 closes the login management interface 520, and re-displays the home screen 510 shown in FIG. 4.

It may be understood that, if the user does not tap the return control 523, after the first electronic device 101 (login manager) receives the information required for logging in to the application server, or after a preset length of time, the first electronic device 101 may automatically close the login management interface. In this way, operations of the user can be reduced.

It may be understood that the QR code 521 in FIG. 5 is displayed in full screen, but this is not limited in this embodiment of this application. For example, in a possible implementation, the QR code 521 may be suspended on another interface, for example, suspended on a video player window or suspended on a browser window.

It should be noted that the QR code 521 is not generated by a service website or an application server (for example, the application server 103), but is generated by the first electronic device 101. Moreover, when the QR code 521 is just presented, the first electronic device 101 is not specified to log in to an application server, and the user may specify, by using the second electronic device 102, an application server to which the first electronic device 101 is to log in. For details, refer to the following embodiment.

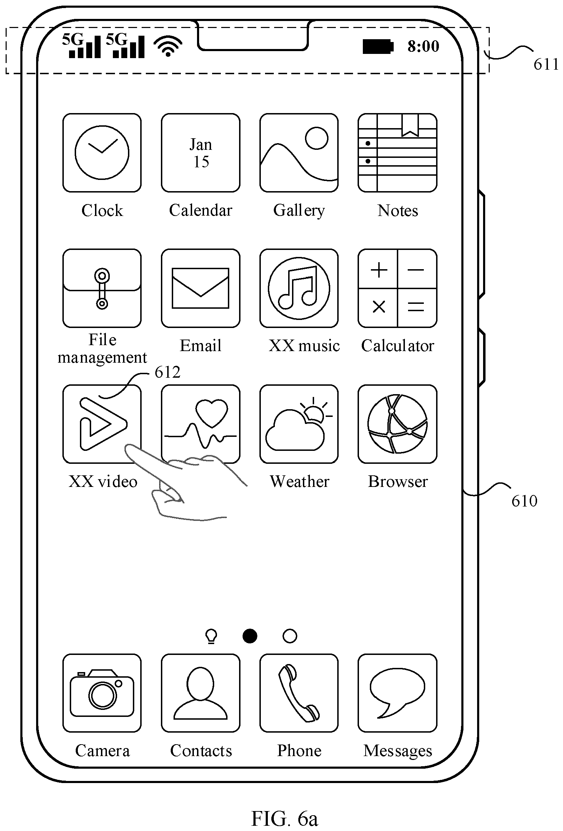

FIG. 6a to FIG. 6f show a process in which the first APP (where the following uses an XX video as an example) of the second electronic device 102 authorizes or triggers login of the first electronic device 101.

FIG. 6a shows an example of a home screen 610 of the second electronic device 102. The home screen 610 may include a status bar 611 and one or more application icons (including XX video 612, XX music 613, and the like).

The status bar 611 may include one or more signal strength indicators of a mobile communication signal (which may also be referred to as a cellular signal), one or more signal strength indicators of a Wi-Fi signal, and a time indicator.

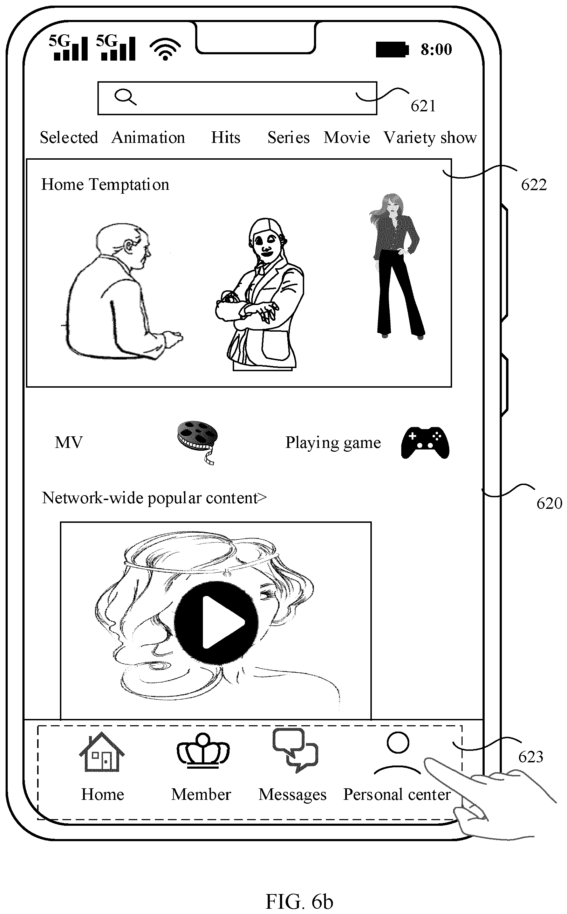

The one or more application icons indicate applications installed on the second electronic device 102, including Clock, Calendar, Gallery, Notes, XX video 612, and the like. When the second electronic device 102 receives a user operation on the icon XX video 612, the second electronic device 102 displays an interface of XX video. For example, FIG. 6b shows an application interface 620 of the XX video APP. The application interface 620 includes a search box 621, a video recommendation area 622, and an interface selection area 623.

The search box 621 is used to receive a search keyword entered by the user, and search for, based on the search keyword, a video resource related to the search keyword. The video recommendation area 622 displays a recommended video.

The interface selection area 623 includes a "Home" interface, a "Member" interface, a "Messages" interface, and a "Personal center" interface. It can be learned that the "Home" in FIG. 6b is marked in black, indicating that the currently displayed page is the home interface. When the second electronic device 102 receives a user operation on the "Personal center", the second electronic device 102 displays the personal center interface.

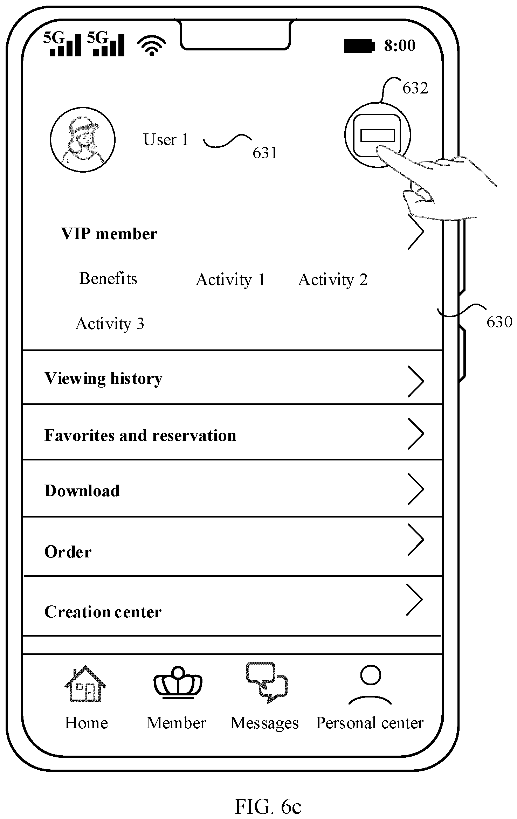

FIG. 6c shows a personal center interface 630. The personal center interface 630 displays a user information area 631, a code scanning function control 632, and a series of function controls.

It is displayed in the user information area 631 that a current login user is a user 1.

The code scanning function control 632 provides a scanning function, and may be used to scan and recognize a QR code. When the second electronic device 102 receives a user operation on the code scanning function control 632, the second electronic device 102 displays a scanning interface.

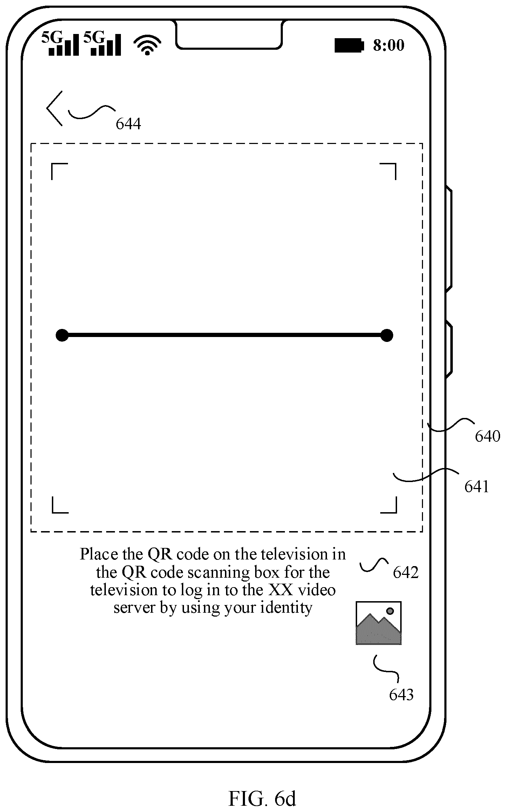

FIG. 6d shows a scanning interface 640. The scanning interface 640 includes a scanning area 641, prompt information 642, a picture upload control 643, and a return control 644.

The scanning area 641 is used to scan a QR code.

The prompt information 642 is used to prompt the user of a function of the scanning area 641, for example, "Place the QR code on the television in the box for the television to log in to the XX video server by using your identity".

The picture upload control 643 is configured to upload a QR code picture on the television for parsing and identification by the application, instead of directly scanning the QR code on the television by using the scanning area 641.

The return control 644 is configured to return to a previous-level interface. For example, when the second electronic device 102 receives a user operation on the return control 644, the second electronic device 102 displays the personal center interface 630 shown in FIG. 6c.

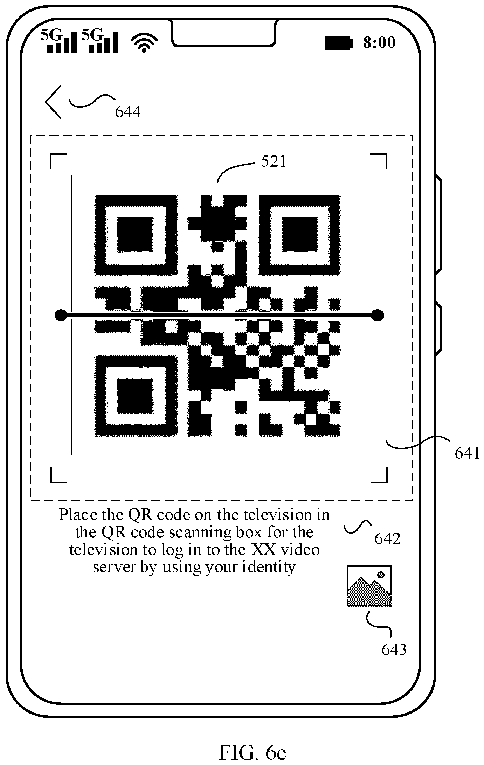

In this case, the second electronic device 102 may scan, by using the code scanning function, the QR code 521 shown in the first electronic device 101. As shown in FIG. 6e, in the scanning area 641 of the second electronic device 102, the QR code 521 displayed in the first electronic device 101 is being scanned. The XX video APP of the second electronic device 102 scans and parses the QR code 521, so that the first electronic device 101 obtains information required for logging in to the application server of the XX video APP by using the identity of the login user of the XX video APP on the second electronic device 102, for example, login target information and login credential information. For details, refer to the following embodiments of this application.

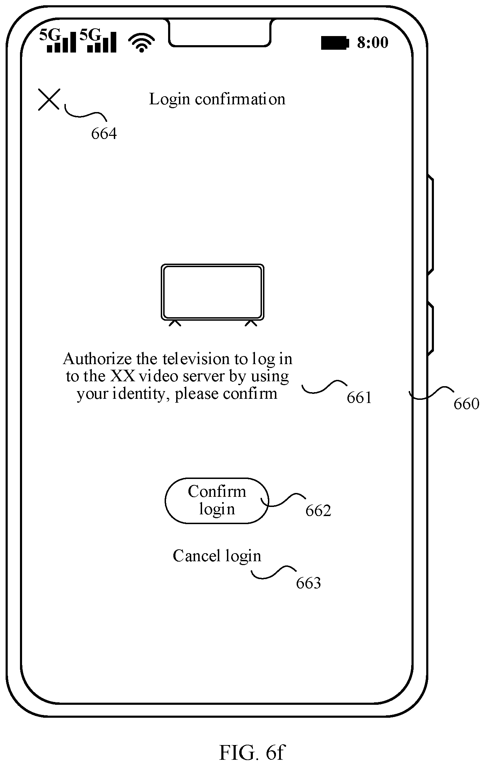

Optionally, before this, the second electronic device 102 receives an authorization confirmation instruction of the application server of the XX video, and the second electronic device 102 displays a login confirmation interface. FIG. 6f shows an example of a login confirmation interface 660. The login confirmation interface 660 includes indication information 661, a login control 662, a login cancel control 663, and an exit control 664.

The indication information 661 indicates the user to confirm login authorization, that is, confirm to authorize the television to log in to the XX video server by using an account used by the user to log in to the XX video application on the mobile phone, for example, "Authorize the television to log in to the XX video server by using your identity, please confirm".

The login control 662 is configured to confirm login authorization. For example, after the second electronic device 102 receives a user operation on the login control 662, the first electronic device 101 (television) may obtain login indication information, where the login indication information includes information required for logging in to the XX video server, and log in to the XX video server based on the login indication information.

The login cancel control 663 is configured to cancel login. For example, when the second electronic device 102 receives a user operation on the login cancel control 663, the second electronic device 102 displays the scanning interface 640 shown in FIG. 6d.

The exit control 664 is configured to exit the code scanning function. For example, when the second electronic device 102 receives a user operation on the exit control 664, the second electronic device 102 exits the code scanning function, and displays the personal center interface 630 shown in FIG. 6c.

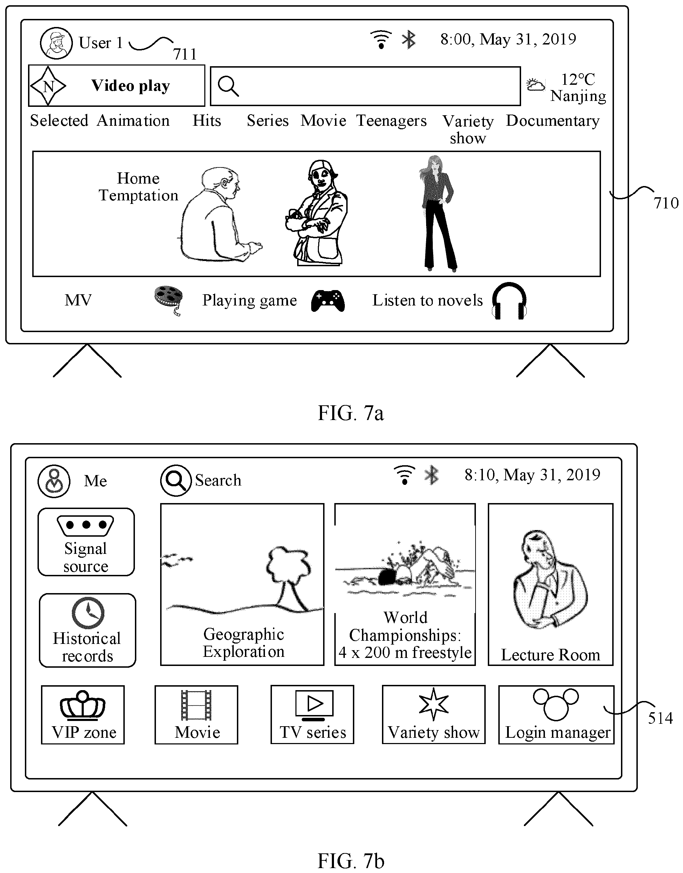

After the second electronic device 102 authorizes the login, the first electronic device 101 obtains the login indication information, and logs in to the XX video server based on the login indication information. As shown in FIG. 7a, the first electronic device 101 displays an application interface 710 of XX video. It can be learned that the application interface 710 displayed by the first electronic device 101 is an interface of the XX video APP. Refer to the application interface 620 shown in FIG. 6b. In addition, the application interface 710 includes a user information area 711, and the user information area 711 displays a case that a current login user is a user 1, namely, the login user of the XX video APP on the second electronic device 102.

It should be noted that, in the foregoing embodiment, the first electronic device 101 does not need to download the XX video APP. The first electronic device 101 obtains the login indication information of XX video, and may log in to, based on the login indication information by using the browser, a website corresponding to the XX video APP.

In this embodiment of this application, the QR code 521 shown in the first electronic device 101 is universal. To be specific, the QR code is not limited to being scanned by an application, and another application may also trigger or authorize login of the first electronic device 101 based on the QR code. In this way, after being triggered based on the QR code 521 to log in to a server corresponding to the application server 103, the first electronic device 101 may be further triggered based on the QR code 521 to log in to a server corresponding to a second application.

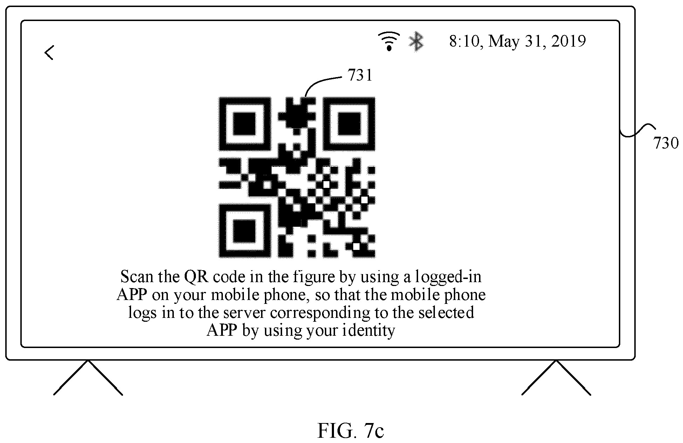

FIG. 7b and FIG. 7c show user interfaces for re-starting the login manager of the first electronic device 101.

After the first electronic device 101 logs in to the application server 103 based on the QR code 521 and displays the application interface of the first APP (as shown in FIG. 7a), the first electronic device 101 re-starts the login manager. As shown in FIG. 7b, the first electronic device 101 displays a home screen (refer to the related description of FIG. 4).

When the first electronic device 101 receives a user operation on the login manager icon 514, the first electronic device 101 enters a corresponding login management interface.

FIG. 7c shows an example of a login management interface 730. The login management interface 730 includes a QR code 731. For a detailed description of the login management interface 730, refer to the related description of the login management interface 520 in FIG. 5. The QR code 731 is generated by the login manager on the first electronic device 101, and the QR code 731 and the QR code 521 have a same function.

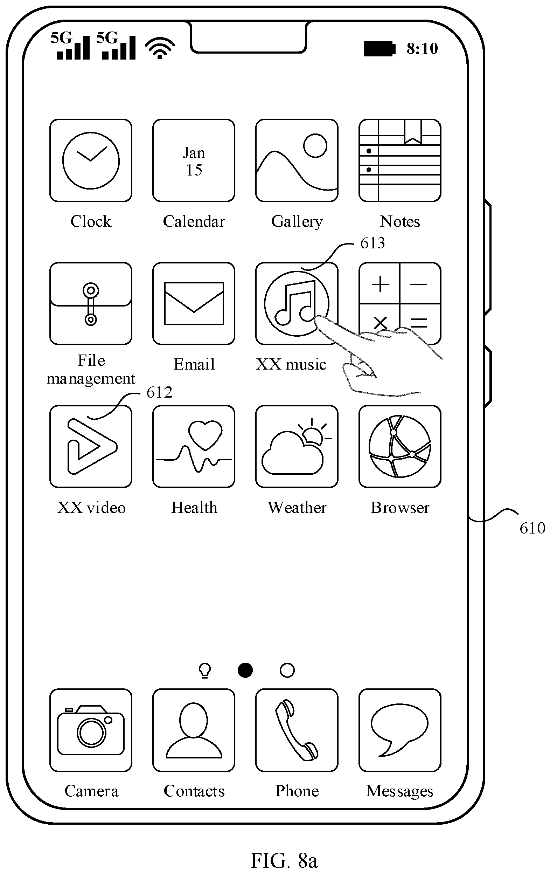

FIG. 8a to FIG. 8f show user interfaces of a process in which a second application (where the following uses an XX music application as an example) of the second electronic device 102 authorizes login of the first electronic device 101.

FIG. 8a shows a home screen 610 of the second electronic device 102. FIG. 8a is the same as FIG. 6a. For a detailed description of the home screen 610, refer to the related description of FIG. 6a.

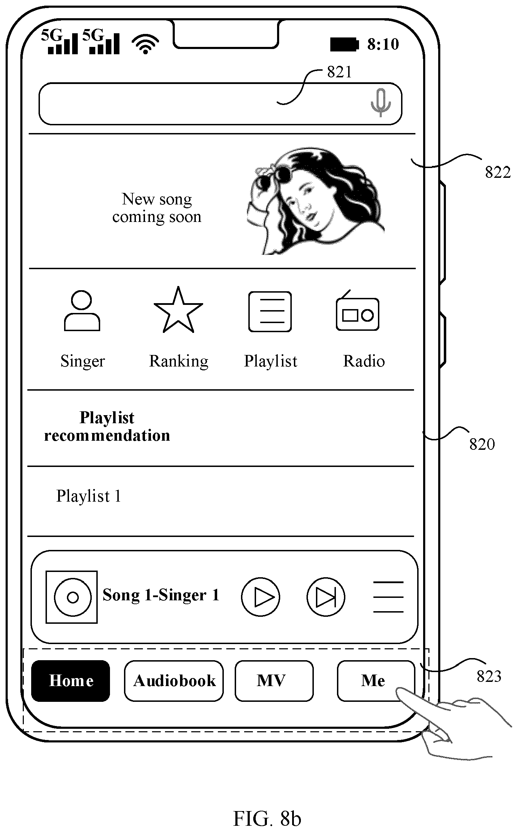

When the second electronic device 102 receives a user operation on XX music 613, the second electronic device 102 displays an application interface of an XX music APP. For example, FIG. 8b shows an application interface 820 of the XX music APP. The application interface 820 includes a search box 821, an XX music recommendation area 822, and an interface selection area 823.

The search box 821 is used to receive a search keyword entered by the user, and search for, based on the search keyword an XX music resource related to the search keyword. The video recommendation area 822 displays a recommended XX music song, a recommended XX music playlist, and the like.

The interface selection area 823 includes a "Home" interface, an "Audiobook" interface, an "MV" interface, and a "Me" interface. It can be learned that the "Home" in FIG. 8b is marked in black, indicating that the current displayed interface is the home interface. When the second electronic device 102 receives a user operation on "Me", the second electronic device 102 displays the "Me" interface.

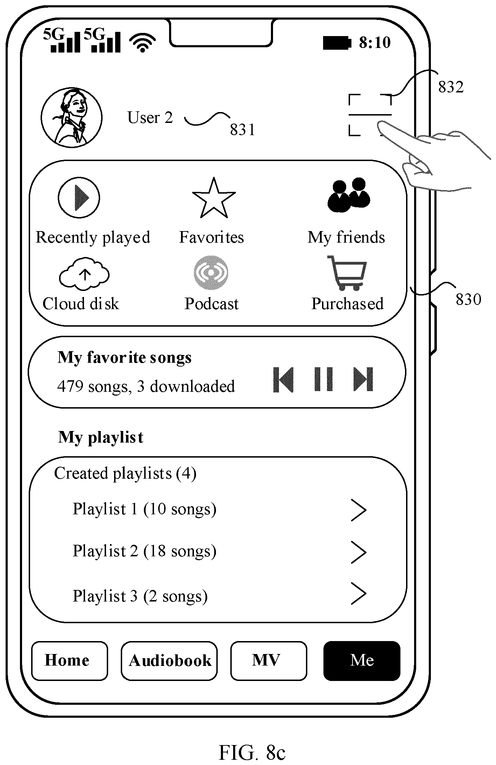

FIG. 8c shows a "Me" interface 830. The personal center interface 830 displays a user information area 831, a code scanning function control 832, and a series of function controls.

It is displayed in the user information area 831 that a current login user is a user 2.

The code scanning function control 832 provides a scanning function, and may be used to scan and recognize a QR code. When the second electronic device 102 receives a user operation on the code scanning function control 832, the second electronic device 102 displays a scanning interface.

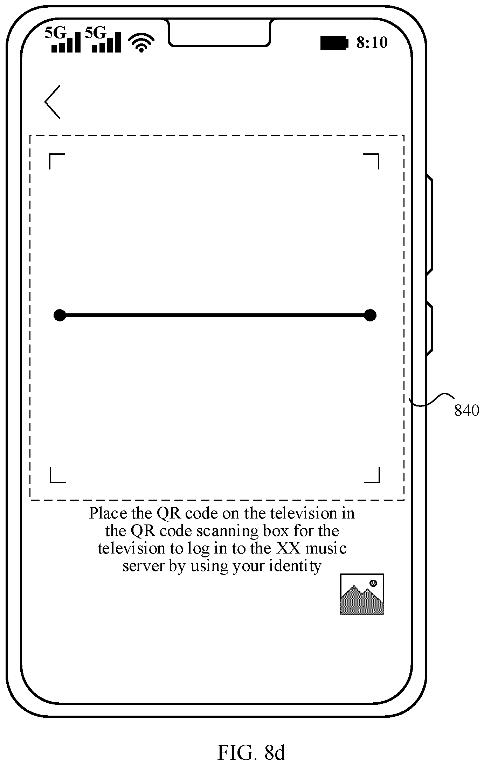

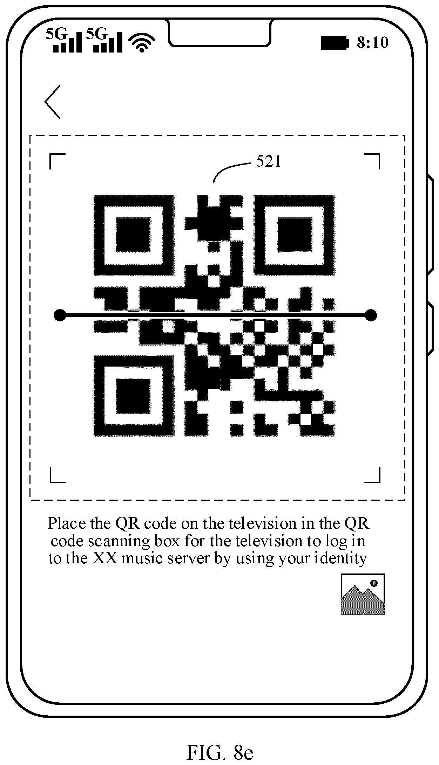

FIG. 8d shows a scanning interface 840. For a detailed description of the scanning interface 840, refer to the related description of FIG. 6d. In this case, the second electronic device 102 may scan, by using the code scanning function, the QR code 521 shown in the first electronic device 101. As shown in FIG. 8e, in the scanning area of the second electronic device 102, the QR code 731 displayed in the first electronic device 101 is being scanned. The XX music APP of the second electronic device 102 scans and parses the QR code 731, so that the first electronic device 101 obtains information required for logging in to an application server of the XX music APP by using an identity of the login user of the XX music APP on the second electronic device 102, for example, login target information and login credential information. For details, refer to the following embodiments of this application.

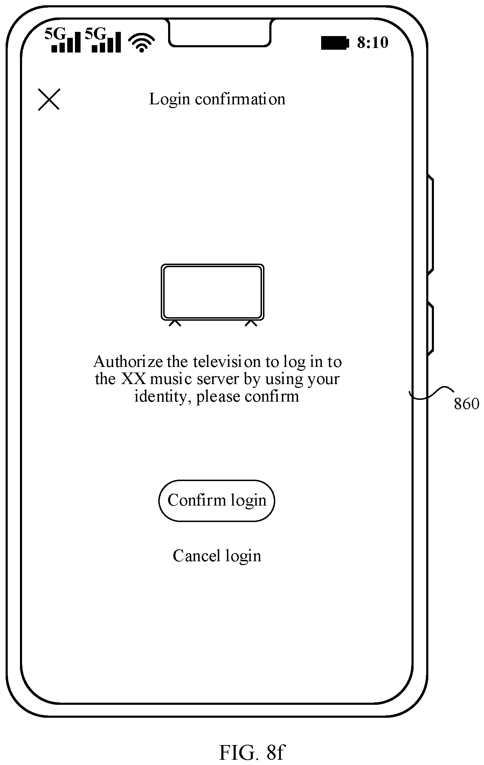

Optionally, before this, the second electronic device 102 receives an authorization confirmation instruction from the application server of the XX music APP, and the second electronic device 102 displays a login confirmation interface. FIG. 8f shows an example of a login confirmation interface 860. For a detailed description of the login confirmation interface 860, refer to the related description of FIG. 6f.

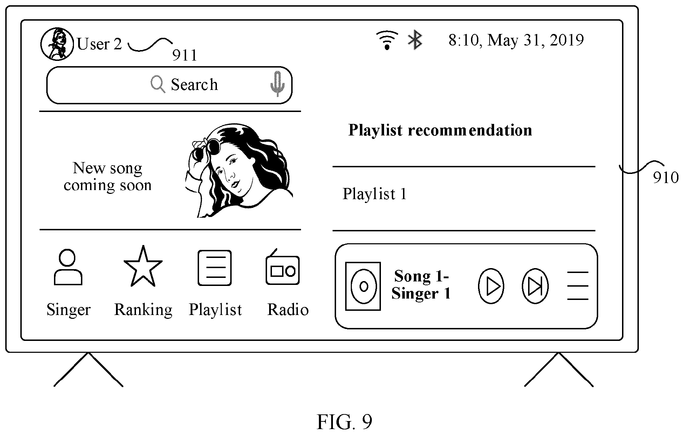

After the second electronic device 102 authorizes the login, the first electronic device 101 obtains login indication information, and logs in to the XX music server based on the login indication information. As shown in FIG. 9, the first electronic device 101 displays an application interface 910 of the XX music APP. It can be learned that the application interface 910 displayed by the first electronic device 101 is an application interface of the XX music APP. Refer to the application interface 820 shown in FIG. 8b. In addition, the application interface 910 includes a user information area 911, and the user information area 911 displays a case that a current login user is the user 2, namely, the login user of the XX music APP on the second electronic device 102.

In the foregoing embodiment, the first electronic device 101 does not need to download the XX music APP. The first electronic device 101 obtains the login indication information of XX music, and may log in to, based on the user information by using the browser, a website corresponding to the XX music APP.

It should be noted that the manner in which the first electronic device 101 logs in to each application by scanning a QR code is an example manner, and is not limited to scanning. The second electronic device 102 may further obtain the device information of the first electronic device 101 in wireless communication manners, for example, obtain the device information of the first electronic device 101 through BT, NFC, Wi-Fi, Wi-Fi Direct, or in other manners. This is not limited in this application. After obtaining the device information of the first electronic device 101, the second electronic device 102 authorizes the first electronic device 101 to implement login, where the second electronic device 102 and the first electronic device 101 may implement communication through BT, NFC, Wi-Fi, Wi-Fi Direct, or in other manners.

The foregoing example describes the implementation process of the communication method on the user interfaces of the first electronic device 101 and the second electronic device 102. The following describes in detail the communication method provided in embodiments of this application with reference to the foregoing system architecture and the user interfaces. The login manager is installed on the first electronic device 101, and the first electronic device 101 may implement application login to a plurality of applications by using the login manager.

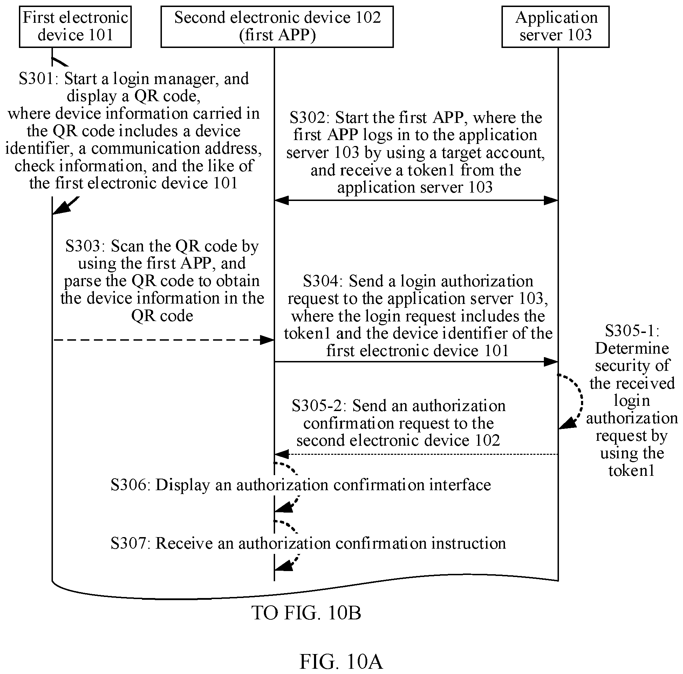

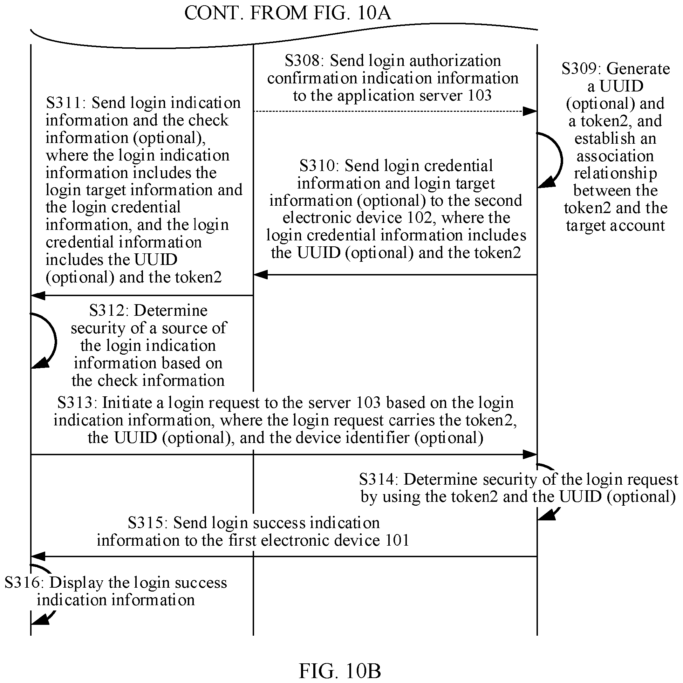

FIG. 10A and FIG. 10B are an example of a schematic flowchart of a communication method.

Step **S301:** A first electronic device 101 starts a login manager, and displays a QR code, where the QR code carries device information of the first electronic device 101.

The device information indicates that the first electronic device 101 has prepared computer resources, where the computer resources are used to log in to a server whose address is to be specified. The computer resources include but are not limited to hardware resources and software resources. The hardware resources include but are not limited to remaining memory space, a CPU processing capability, a network connection, network bandwidth, and the like. The software resources include but are not limited to browser software, codec software, and the like. This is not limited in embodiments of this application.

For example, the device information includes information such as a device identifier of the first electronic device 101, a communication address of the first electronic device 101, and check information (optional).

The device identifier of the first electronic device 101 is a device ID, for example, may be a device SN number. The device identifier identifies a first user equipment.

The communication address of the first electronic device 101 is an address for receiving login indication information, and therefore may also be referred to as a login indication information receiving address. For example, the communication address includes a MAC address or an IP address + a port number, where the IP address may be an internal IP address of the first electronic device, or may be a public IP address of the first electronic device, or may include both an internal IP address and an external IP address, where the external IP address is a public IP address that can be accessed by a network side device (for example, an application server 103), and the internal IP address is a private IP address that cannot be accessed by the network side device but can be accessed by a device in a same local area network, for example, can be accessed by a second electronic device 102. Optionally, the communication address includes information about a communication manner or a communication protocol, such as a TCP/IP, a Bluetooth protocol, an NFC protocol, and an HTTP (Hypertext Transfer Protocol, Hypertext Transfer Protocol). For example, the communication address herein includes an internal network access URL (denoted as Login-Indication-Receiver-In-URL) of an HTTP service enabled on the first electronic device 101, for example, "http://internal IP address of the first electronic device 101:8080/login-indication-receiver", and may be used to receive login indication information from the second electronic device 102 (for details, refer to the following step 311), and is used to receive login indication information from the second electronic device 102. For details, refer to the following step 311.

The check information is optional, and is used to improve security of the first electronic device 101, for example, used to verify security or validity of a source of login indication information received by the first electronic device 101, and reduce a possibility that the first electronic device 101 receives and executes login indication information sent by an unauthorized device. For details, refer to the following embodiments.

For example, the check information may be dynamically generated by the login manager, for example, a string of random numbers generated by using time as a random seed, and may be used to verify an identity of an interactive device. The interactive device is a device that communicates with the first electronic device 101. The second electronic device 102 may obtain the check information in the QR code by scanning and parsing the QR code. In this way, in subsequent interaction, the second electronic device 102 sends a message carrying the check information to the first electronic device 101, and the first electronic device 101 may verify a valid identity of the message based on the check information, to perform a corresponding operation. For the dynamically generated check information, the first electronic device may set a valid time range of the check information. In this way, when subsequently receiving an interaction request message (for example, the message in step 311) carrying the check information, the first electronic device 101 determines that message receiving time is within the valid time range, and then determines that a sender of the request message is an authorized user; otherwise, the sender is an unauthorized user. For example, the first electronic device 101 may store the check information.

For example, the check information may alternatively be statically set or stored, for example, may be a fixed numeric string or character string, and may also be used to perform identity authentication on the foregoing interactive device.

A specific form of the check information is not limited in embodiments of this application.

In some embodiments, the login manager may be an independent application. After the function is installed, a user may find a corresponding icon on a desktop or a folder of the first electronic device 101, and the user taps the icon to enable the function. The login manager may alternatively be similar to a function such as a calculator or a notepad, and become a built-in function in the system of the first electronic device 101, so that the user can use the function without installation. Refer to the interfaces shown in FIG. 4 and FIG. 5. The first electronic device 101 is a television, an application of the login manager is installed on the first electronic device 101, and the first electronic device 101 starts the login manager and displays the QR code. The QR code is used to obtain login user information, and the first electronic device 101 may log in to a corresponding application based on the obtained user information.

In some embodiments, the login manager may be a function, namely, a subprogram, in an application.

In some embodiments, the login manager may be a built-in function of a website. The first electronic device 101 may access a specific website address to enter a web page, start the login manager on the web page, and display the QR code.

Optionally, the first electronic device 101 may start the login manager by using a default web page of a browser. For example, after the user starts the browser on the first electronic device 101, the displayed default web page is a web page corresponding to the login manager, and the web page includes the QR code.

In some embodiments, the first electronic device 101 starts the login manager, and after receiving a login instruction, the first electronic device 101 displays the QR code.

In some embodiments, the QR code may be a dynamic QR code, or may be a static QR code.

Step S302: The second electronic device 102 starts a first APP, where the first APP logs in to the application server 103 by using a target account, and receives a token token1 from the application server 103.

Specifically, the second electronic device 102 logs into the application server 103 based on registered user information (for example, an account and a password). A default URL pointing to the application server 103 is built in the first APP. The default URL may also be referred to as an initial URL. When the second electronic device 102 does not log in to the application server 103, the second electronic device 102 may access the application server 103 based on the default URL.

In some embodiments, the second electronic device 102 starts the first APP, and enters the account and the password. The second electronic device 102 sends a login request to the application server 103 by using the default URL pointing to the application server 103, where the login request includes the entered account and password. After receiving the login request, the application server 103 checks the account and the password. After the check succeeds, the application server 103 sends a login success message to the second electronic device 102, generates the token1 based on the user information, login time, a device identifier of the second electronic device 102, and the like, locally establishes an association relationship or a correspondence between the token1 and the target account, and includes the token1 in the login success message. After receiving the login success message, the second electronic device 102 stores the token1, where the token1 is used to provide an identity credential for the application server 103 during subsequent accessing to the application server 103 (that is, sending a request message to the application server 103).

For a detailed description of step S302, refer to the related description of step S205. Details are not described herein again. In this embodiment of this application, the account used by the second electronic device 102 to log in to the application server 103 may also be referred to as a target account of the second electronic device 102. A client application of the application server includes the first APP.

After logging in to the application server 103 by using the target account, the second electronic device 102 obtains a login address provided by the application server 103, where the login address is an address used by the second electronic device 102 to access the application server 103 after the target account is logged in.

Step S303: The second electronic device 102 scans, by using the first APP, the QR code displayed on the first electronic device 101, and parses the QR code to obtain the device information in the QR code.

The second electronic device 102 has successfully logged in to the application server 103. The second electronic device 102 obtains, through parsing, the device information carried in the QR code, where the device information includes one or more of the device identifier, the communication address, the check information, and the like of the first electronic device 101.

The foregoing steps S301 to S303 describe a process in which the second electronic device 102 obtains the device information (one or more of the device identifier of the first electronic device 101, the communication manner and address of the first electronic device 101, the check information, and the like) of the first electronic device 101 by scanning the QR code shown by the first electronic device 101, to send a login authorization request to the application server 103.

In some embodiments, the manner of scanning a QR code is an example manner. However, this embodiment of this application is not limited to this manner. The second electronic device 102 may further obtain the device information of the first electronic device 101 in a wireless communication manner. For example, the wireless communication manner is BT, NFC, Wi-Fi, Wi-Fi Direct, or the like.

In a possible implementation, after the user triggers the login manager icon 514, the first electronic device 101 sends a broadcast message to surrounding devices (including the second electronic device 102), where the broadcast message includes the device information of the first electronic device 101. In this way, the second electronic device 101 may receive and parse the broadcast message to obtain the device information.

In another possible implementation, after the user triggers the login manager icon 514, the first electronic device 101 enables a message listening service (for example, an HTTP service), and then the second electronic device 102 sends a request message (for example, an HTTP request message) to the first electronic device 101 to indicate the first electronic device 101 to provide the device information. The first electronic device 101 returns a response message (for example, an HTTP response message) to the second electronic device 102, where the response message includes the device information of the first electronic device 101.

The second electronic device 102 may obtain the device information of the first electronic device 101 by using an NFC message. The second electronic device 102 obtains the device information of the first electronic device 101, and sends the login authorization request to the application server 103.

**Step S304:** The second electronic device 102 sends the login authorization request to the application server 103, where the login authorization request includes the token1 and the device identifier of the first electronic device 101.

After the second electronic device 102 scans the QR code, the information obtained by parsing the QR code includes one or more of the device identifier of the first electronic device 101, the communication manner and address of the first electronic device 101, the check information, and the like.

In some embodiments, the second electronic device 102 scans, based on the code scanning function of the first APP, the QR code displayed on the first electronic device 101, to obtain the device information of the first electronic device 101, and the second electronic device 102 sends the login authorization request to the application server 103 corresponding to the first APP.

In some embodiments, after the second electronic device 102 obtains the device information of the first electronic device 101 in the wireless communication manner, the second electronic device 102 provides, for the user to select, applications that can be authorized for login, and the second electronic device 102 sends, based on the first APP selected by the user, the login authorization request to the application server 103 corresponding to the first APP.

In some embodiments, after determining the first APP selected by the user, the second electronic device 102 obtains the device information of the first electronic device 103 in the wireless communication manner, and sends the login authorization request to the application server 103 corresponding to the first APP.

The second electronic device 102 sends the login authorization request to the application server 103. In this embodiment of this application, the login authorization request may also be referred to as a first request. The login authorization request is used to request the application server 103 to authorize the first electronic device 101 to log in to the application server 103 by using the target account (the account used by the second electronic device 101 to log into the application server 103).

In some embodiments, the login authorization request includes all or part of the obtained device information. Optionally, the login authorization request includes the device identifier of the first electronic device 101 that indicates an identity of the first electronic device 101 or identifies the first electronic device 101. The login authorization request further includes the communication address of the first electronic device 101. Subsequently, the application server 103 may send the login indication information to the first electronic device 101 by using the communication address. The login authorization request further includes the token1, where the token1 is received from the application server 103 when the second electronic device 102 logs in to the application server 103, and indicates an identity of the second electronic device 102 to the application server 103.

The token means "token", and is a character string generated by the server as an identifier for a client to send a request. The token is generated by the application server. For example, the token may be a result of encryption and/or signature. In this way, the client and a third party cannot parse and modify the token. The application server may use the token to check whether a subsequent request is initiated by a valid login user, and parse the token to obtain the user information or session ID information for corresponding service processing.

For specific implementation of the foregoing steps, refer to the interfaces shown in FIG. 6a to FIG. 6e. The second electronic device 102 is a mobile phone, the first APP is XX video, and the second electronic device 102 scans the QR code in the first electronic device 101 by using the code scanning function in XX video.

In some embodiments, the token1 in the login authorization request may be placed in a URL. For example, a data structure of the login authorization request may be:
GET https://application server URL/Auth?device_SN=xxx&device_IP=x.x.x.x&device_Port:xx&check_code=xxx&Token=xxxxx.

The parameter "Token=xxxxx" in the URL in the HTTP request carries the token1.

Optionally, the token1 in the login authorization request may alternatively be placed in a header field (header) of the HTTP request. For example, the data structure of the login authorization request may be:

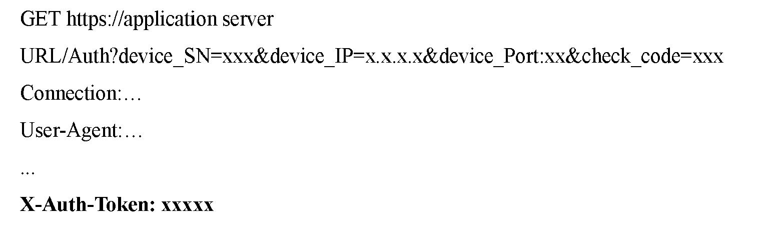

**Step S305-1:** The application server 103 determines security of the received login authorization request by using the token1.

After the first APP of the second electronic device 102 logs in to the application server 103, in order to facilitate interaction between the first APP and the application server 103, the application server 103 generates the token1 to replace identity authentication functions of the account and the password. There is an association relationship between the token1 and the target account used by the first APP of the second electronic device 102 to log in to the application server 103. When the application server 103 receives the login authorization request carrying the token1, the application server 103 determines, by checking the token1, that the received login authorization request is initiated by a logged-in valid account (target account).

**Step S305-2:** The application server 103 sends an authorization confirmation request to the second electronic device 102.

The application server 103 performs authorization confirmation to the second electronic device 102, where the authorization confirmation request is used to confirm, to the second electronic device 102, whether to authorize login to the application server 103 on the first electronic device 101 by using the target account.

**Step S306:** The second electronic device 102 displays an authorization confirmation interface.

The second electronic device 102 displays the authorization confirmation interface based on the received authorization confirmation request. Optionally, the second electronic device 102 outputs prompt information based on the received authorization confirmation request, where the prompt information is used to prompt the user to perform authorization confirmation.

**Step S307:** The second electronic device 102 receives a confirmation instruction for the authorization confirmation interface. The confirmation instruction may be a tap operation of tapping a confirmation button by the user, or may be a voice instruction or the like.

For example, for the authorization confirmation interface, refer to the interface 660 shown in FIG. 6f. The confirmation instruction may be a user operation on the login control 662 in the interface 660.

**Step S308:** The second electronic device 102 sends login authorization confirmation indication information to the application server 103.

It may be understood that step S305 to step S308 are optional. The foregoing steps S305 to S308 describe a process in which the second electronic device 102 performs login authorization confirmation. To be specific, the second electronic device 102 displays the authorization confirmation interface, and the application server 103 can implement authorization only after the user performs authorization confirmation, thereby improving security in the login authorization process.

**Step S309:** The application server 103 generates a UUID (optional) and a token token2, and establishes an association relationship or a correspondence between the token2 and the target account.

Specifically, after receiving the login authorization confirmation indication information in step S308 or receiving the login authorization request (first request) in step S304, the application server 103 records that the login authorization request in step S304 is accepted, where the login authorization request is used to request the application server 103 to authorize login of the first electronic device 101 by using the target account (the account used by the second electronic device 101 to log in to the application server 103). The application server 103 records that the login authorization request is accepted. In other words, the application server 103 authorizes the first electronic device 101 to log in to the application server 103 by using the target account. Optionally, the application server 103 may record an association relationship between the device identifier of the first electronic device 101 and information indicating that the login authorization request is accepted.

For the case in which the application server 103 authorizes the first electronic device 101 to log in to the application server 103 by using the target account, an example implementation is as follows: The application server 103 generates authentication information, for example, the token token2, based on a parameter such as a device identifier timestamp of the first electronic device 101, and establishes the association relationship or the correspondence between the token2 and the target account. In this way, when the first electronic device 101 interacts with the application server 103, the first electronic device 101 may prove a valid identity of the first electronic device 101 by providing the token2. Because the token2 has the association relationship or the correspondence with the target account, when the application server 103 receives the login request carrying the token2, the application server 103 determines, by checking the token2, that the received login authorization request is initiated by a logged-in valid account (target account).

To limit the token2 to be used by the first electronic device, for example, the application server 103 may further establish an association relationship between the token2 and the device identifier of the first electronic device 101. In this way, when a device other than the first electronic device 101 subsequently provides the token2 to the application server 103, the application server 103 determines that a device identifier in a login request message is different from the device identifier (namely, the device identifier of the first electronic device 101) associated with the token2, and may return login failure indication information, to reject login.

In some embodiments, the application server 103 generates a UUID, and associates the UUID with the login authorization request. When the application server 103 receives the UUID sent by the first electronic device 101, the application server 103 may provide an application resource of the target account for the first electronic device 101. The application resource of the target account is data generated, received, or recorded by the application server 103 when an electronic device (for example, the first electronic device 101 or the second electronic device 102) accesses the application server 103 by using the target account, where the data includes historical data, user information data, and the like. For example, if the application server 103 is the server corresponding to the XX video APP, the application resource includes a historical viewing/browsing record, a video play progress, member information, and the like.

Optionally, the application server 103 records a correspondence between the UUID and the device identifier of the first electronic device 101. If the second electronic device 102 completes login authorization for the first electronic device 101, the application server 103 records that a login account of the first electronic device 101 is a login account used by the second electronic device 102 to log in to the application server 103. In other words, a login account corresponding to the UUID is the target account used by the second electronic device 102 to log in to the application server 103.

In some embodiments, the UUID (optional) and the token token2 that are generated by the application server 103 may be referred to as login credential information. Because the UUID, the token2, and the like have association relationships with the target account, it may be understood that the login credential information also has an association relationship with the target account. For example, the first electronic device 101 may obtain the application resource of the target account from the application server 103 based on the login credential information. To be specific, the first electronic device may send the login credential information to the application server 103, to receive the application resource of the target account from the application server 103.

Step S310: The application server 103 sends the login credential information and login target information (optional) to the second electronic device 102, where the login credential information carries the token2 and the UUID (optional).

Specifically, the login credential information includes the token2, and optionally, further includes the UUID. It may be understood that, that the login credential information carries the token2 and the UUID is merely a specific implementation form, and belongs to a solution with a same conception of the present invention, provided that the login credential information includes information indicating that the application server 103 authorizes the first electronic device 101 to log in to the application server 103 by using the target account. As described in step 309, the login credential information has the association relationship with the target account.

Specifically, the login target information is information related to the application server 103.

In a possible implementation, the login target information includes the login address of the application server 103, and the login address is an address (URL) used by the first electronic device 101 to access the application server 103 after the target account is logged in. When the client application (first APP) of the application server is not installed on the first electronic device 101, the first electronic device 101 may open the login address by using the browser (Browser). When the first APP is installed on the first electronic device 101, the first electronic device 101 may open the login address by using the first APP. Alternatively, when the first APP is installed on the first electronic device 101, the first electronic device 101 may determine, based on selection of the user, whether to open the login address by using the browser or open the login address by using the first APP.

In another possible implementation, the login target information includes application information, for example, a name or an identifier of the client application (first APP) corresponding to the application server 103, for example, an ID of the first APP or a name of the first APP. When the client application (first APP) of the application server is installed on the first electronic device 101, the first electronic device 101 may start the first APP based on the obtained application information (APP ID or APP Name).

Because step S305 to step S308 are optional, in some embodiments, step S305 to step S308 do not need to be performed, and the application server 103 sends the login indication information to the second electronic device 102 in response to the login authorization request in step S304. In some embodiments, step S305 to step S308 are performed, and the application server 103 sends the login indication information to the second electronic device 102 in response to the login authorization confirmation indication information in step S308.

In some embodiments, a message including the login indication information may be:

```
          HTTP/1.1 200 OK
          Date: YYYY-MM-DD hh:mm:ss
          Content-Type: application/json
          Content-Length: xxx
          {
          "UUID": ............... //UUID
          "login-token": ...............//token2
          "login-target-url":............//login target information (login address)
          }
```

}**Step S311:** The second electronic device 102 sends the login indication information and the check information (optional) to the first electronic device 101, where the login indication information includes the login target information and the login credential information.

Specifically, after receiving the login credential information and the login target information (if any), the second electronic device 102 sends the login indication information and the check information to the first electronic device 101, where the login indication information indicates that the first electronic device 101 has been authorized to log in to the application server 103. The login indication information carries the login target information and the login credential information. The check information is used by the first electronic device 101 to check the received information, and after the check succeeds, the first electronic device 101 processes the login indication information. For example, the second electronic device 102 sends the login indication information and the check information to the first electronic device 101 based on the communication address of the first electronic device 101 that is obtained in step 303.

It may be understood that, in step 303, if the first electronic device provides the device information to the second electronic device in a wireless communication manner, for example, in a manner of sending an NFC message, in this step, the second electronic device 102 may return the login indication information and the check information to the first electronic device 101 by using a response message corresponding to the NFC message. In this way, in step 303, the device information encoded into the QR code may not include the foregoing communication address.

In some embodiments, the login credential information includes the token2 and the UUID (optional). The first electronic device 102 may perform identity authentication with the application server 103 based on the token2.

In some embodiments, the login target information is provided by the application server 103 for the second electronic device 102 and then sent by the second electronic device 102 to the first electronic device 101.

In some embodiments, the login target information is provided by the second electronic device 102 for the first electronic device 101. Because the first APP is installed on the second electronic device 102, and the second electronic device 102 successfully logs in to the application server 103 earlier than the first electronic device 101, after the second electronic device 102 successfully logs in to the application server 103, the application server 103 provides the login target information (including the login address) for the second electronic device 102.

In a scenario in which application versions of first APPs that are adapted to the first electronic device 101 and the second electronic device 102 are consistent, for example, both the first electronic device 101 and the second electronic device 102 are mobile phones, the second electronic device 102 may provide the login target information for the first electronic device 101. In a scenario in which application versions of first APPs that are adapted to the first electronic device 101 and the second electronic device 102 are inconsistent, for example, the first electronic device 101 is a television, and the second electronic device 102 is a mobile phone, the login target information of the second electronic device 102 may not be applicable to the first electronic device 101. In this case, the application server 103 provides the login target information for the first electronic device 101.

In some embodiments, before step S311, the second electronic device 102 establishes a communication connection to the first electronic device 101 based on the communication manner and the communication address that are obtained by parsing the QR code, to implement data communication.

For example, the second electronic device 102 sends an HTTP POST request or an HTTP GET (obtain) request to the Login-Indication-Receiver-In-URL, to transfer the login indication information and the check information.

For example, the HTTP POST request is:

```
POST http://internal IP address of the first
electronic device 101:8080/login-indication-receiver
          Connection: ...
          User-Agent: ...
          ...
          Content-Type: application/json
          Content-Length: xxx
          {
             "check_code":............//check information
             "login_url":............//login target
information (login address) in the login indication information
                "login_token":............//token2 in the login indication information
                "UUID":............//UUID in the login indication information
          }
```

}For example, the HTTP GET request is:
GET https://internal IP address of the first electronic device 101: 8080/login-indication-receiver? check_code=xxx &login_url=xxx&login_token=xxxxx&UUID=xxxxx.

**Step S312:** The first electronic device 101 determines security of a source of the login indication information based on the check information.

The first electronic device 101 receives the login indication information and the check information, and checks whether the check information is valid.

It can be learned from step S301 that the check information is a string of random numbers, and the second electronic device 101 obtains the check information by scanning the QR code. In this way, in subsequent interaction, the second electronic device 102 sends a message carrying the check information to the first electronic device 101, and the first electronic device 101 may verify a valid identity of the message based on the check information.

The first electronic device 101 checks the check information provided by the second electronic device 102, and determines whether the check information is the check information provided by the first electronic device 101 in step S301, for example, compares random numbers, where if the random numbers are the same, the check information is valid; otherwise, the check information is invalid. For example, the first electronic device 101 may compare the check information received from the second electronic device 102 with the check information generated or set by the first electronic device 101 in step 301. If the two pieces of check information match, it is determined that the identity of the second electronic device 102 is valid; otherwise, it is determined that the identity of the second electronic device 102 is invalid.

If the identity of the second electronic device 102 is invalid, the login indication information is discarded. In this way, an insecure case in which the television of the user logs in to an application server specified by a mobile phone of a neighbor under the control of the mobile phone of the neighbor can be effectively avoided.

If the identity of the second electronic device 102 is valid, **step S313** is performed: The first electronic device 101 initiates a login request to the application server 103 based on the login indication information, to request to log in to the application server 103. For example, the login request is an HTTP request, and carries the token2, the UUID (optional), and the device identifier (optional).

Because the login indication information received by the first electronic device 101 includes the login credential information and the login target information, and the login target information is the information related to the application server 103, the first electronic device 101 may communicate with the application server 103 based on the login target information. When the login target information includes the login address, the first electronic device 101 sends the login request to the application server 102 based on the login address. When the login target information includes the name or the identifier of the first APP, for example, the ID of the first APP or the name of the first APP, and the client application (first APP) of the application server is installed on the first electronic device 101, the first electronic device 101 may start the first APP based on the obtained application information (APP ID or APP Name), to send the login request to the application server 102 by using the APP.

For example, assuming that the login address in the login indication information received in step 311 is "http://IP address of the application server 103:80/for-tv/login", the initiating a login request to the application server 103 based on the login indication information may be: The first electronic device 101 sends the following HTTP POST (post) request to the application server 103:

```
POST http://IP address of the application server 103:80/for-tv/login
          Connection: ...
          User-Agent: ...
          ...
          Content-Type: application/json
          Content-Length: xxx
          {
              "device-id":............//device identifier
                 "UUID": ...............//UUID
                 "login-token": ...............//token2
          }
```

}**Step S314:** The application server 103 determines security of the login request by using the token2 and the UUID (optional).

In some embodiments, the application server 102 receives the login request sent by the first electronic device 101, where the login request carries the token2 and the device identifier of the first electronic device 101. In step S309, the application server 103 records that the login authorization request is accepted. In other words, the application server 103 authorizes the first electronic device 101 to log in to the application server 103 by using the target account.

Therefore, the application server 103 determines, based on the device identifier of the first electronic device 101, that the first electronic device 101 can log in to the application server 103 by using the target account. The application server 102 determines, based on the token2, that the target account is a valid account. In other words, the login request carrying the token2 is initiated by a valid account. The application server 103 processes the login request.

In some embodiments, the application server 102 receives the login request sent by the first electronic device 101, where the login request carries the token2 and the UUID. In step S309, the application server 103 records that the login authorization request is accepted, generates the UUID, and associates the UUID with the login authorization request. Therefore, when the application server 103 receives the UUID sent by the first electronic device 101, the application server 103 determines that the first electronic device 101 can log in to the application server 103 by using the target account. The application server 102 determines, based on the token2, that the target account is a valid account. In other words, the login request carrying the token2 is initiated by a valid account. The application server 103 processes the login request.

In some embodiments, the application server 102 receives the login request sent by the first electronic device 101, where the login request carries the token2. The token2 has an association relationship with the target account. Therefore, when receiving the login request carrying the token2, the application server 103 checks the token2. For example, the application server 103 searches previously generated tokens for the token2. If the token2 can be found, it is determined that the verification succeeds; otherwise, it is determined that the verification fails. For another example, the application server may search for, by using the UUID, a token corresponding to the UUID, and if the token is the same as the token2 in the login request, it is determined that the verification succeeds; otherwise, it is determined that the verification fails. After the verification succeeds, the application server 103 determines that the received login authorization request is initiated by a logged-in valid account (target account), and then processes the login request, for example, constructs or selects login success indication information.

**Step S315:** The application server 103 sends the login success indication information to the first electronic device 101.

After the application server 103 determines, by using the token2 and the UUID, that the login request is initiated by a valid account, the application server 103 records that the first electronic device 101 successfully logs in to the application server 103 by using the target account, and the application server 103 sends the login success indication information to the first electronic device 101.

In some embodiments, the login success indication information includes a to-be-displayed interface element set.

When the first APP (the client application of the application server 103) is installed on the first electronic device 101, the first electronic device 101 may start the first APP, and display the interface element set in the first APP. Optionally, the first electronic device 101 may start the first APP based on a confirmation instruction of the user, and display the interface element set in the first APP.

When the first APP is not installed on the first electronic device 101, the first electronic device 101 may start the browser, and display the interface element set of the first APP by using the browser. Optionally, the first electronic device 101 may start the browser based on a confirmation instruction of the user, and display the interface element set in the browser.

In some embodiments, the login success indication information includes a page address of a to-be-displayed page. After the application server 103 determines, by using the token2 and the UUID, that the login request is initiated by a valid account, the application server 103 sends the page address of the to-be-displayed page to the first electronic device 101. The first electronic device 101 opens the page address by using the browser or the first APP, and obtains the corresponding to-be-displayed interface element set from the application server 103 based on the page address.

**Step S316:** The first electronic device 101 displays the login success indication information.

The first electronic device 101 displays the login success indication information, and user login information used by the first electronic device 101 for logging in to the application server 103 is user login information (target account) used by the second electronic device 102 for logging into the application server 103. For example, for the login success interface displayed by the first electronic device 101, refer to the interface 710 shown in FIG. 7a. It can be learned that the user login information of the first electronic device 101 in FIG. 7a is the user login information shown by the second electronic device 102 in FIG. 6c.

When needing to interact with the application server 103 subsequently, the first electronic device 101 may prove the real identity of the first electronic device 101 by including the token2.

In some embodiments, after the first electronic device 103 successfully logs in to the application server 103 (for example, after step S315), the application server 103 sends, to the second electronic device 102, the indication information indicating successful login of the first electronic device 103, and the second electronic device 102 may display corresponding prompt information. For example, the second electronic device 102 outputs a pop-up window, to indicate to the user that the application server 103 has been logged in on the first electronic device 101 by using the target account (user information for logging in to the application server 103 by the second electronic device 101). For another example, the second electronic device 102 displays a login identifier of another electronic device (first electronic device 101) on an application interface of the first APP.

In this embodiment of this application, when the second electronic device 102 successfully logs in to the application server 103, if the user intends to authorize login to the application server 103 on the first electronic device 101 by using the second electronic device 102, there is no need to install the first APP on the first electronic device 101. The login manager is installed on the first electronic device 101, and the login manager of the first electronic device 101 provides the device information of the first electronic device 101, where the device information indicates that the first electronic device 101 has prepared to log in to a to-be-specified server. When the second electronic device 102 obtains the device information provided by the first electronic device 101, the second electronic device 102 requests login authorization from the application server 103. The application server 103 authorizes the first electronic device 101 to log in to the application server 103 by using the target account, and provides login indication information for the first electronic device 101. The first electronic device 101 initiates the login request to the application server 103 based on the login indication information, to display a login success interface. When the first APP is not installed on the first electronic device 101, the first electronic device 101 may display, by using the browser, a website corresponding to the first APP, and access the application server 103 by using the target account.

In some embodiments, the actions performed by the first electronic device 101 in step S301 to step S312 in the foregoing embodiments may be performed by using the login manager; and the actions performed by the first electronic device 101 in step S313 to step S316 may be performed by using the first APP or the browser.

The foregoing describes a process in which the first electronic device 101 logs in to the application server 103 by using the login manager, and another application may also be logged in by using the login manager. Logging in to another application is similar to logging in to the application server 103, and the first electronic device 101 does not need to install an application to be logged in to. For example, the login manager provides a QR code login manner. The second electronic device 102 starts and logs into a second application, and the second electronic device 102 scans, based on a code scanning function of the second application, a QR code shown by the first electronic device 101 in step S401. After login authorization requested by the second electronic device 102 to a server corresponding to the second application succeeds (similar to step S304 to step S309), the server corresponding to the second application records that the login account of the first electronic device 101 is the login account for the second electronic device 102 to log in to the second application, and returns a login success interface of the second application to the first electronic device 101. When the second application is not installed on the first electronic device 101, the first electronic device 101 may display, by using the browser, a website corresponding to the second application, and access the server corresponding to the second application by using the target account.

In some embodiments, the foregoing steps S310 and S311 are optional. The application server 103 may not only forward the login success indication information to the first electronic device 101 by using the second electronic device 102, but also directly send the login success indication information and the check information to the first electronic device 101, improving interaction efficiency.

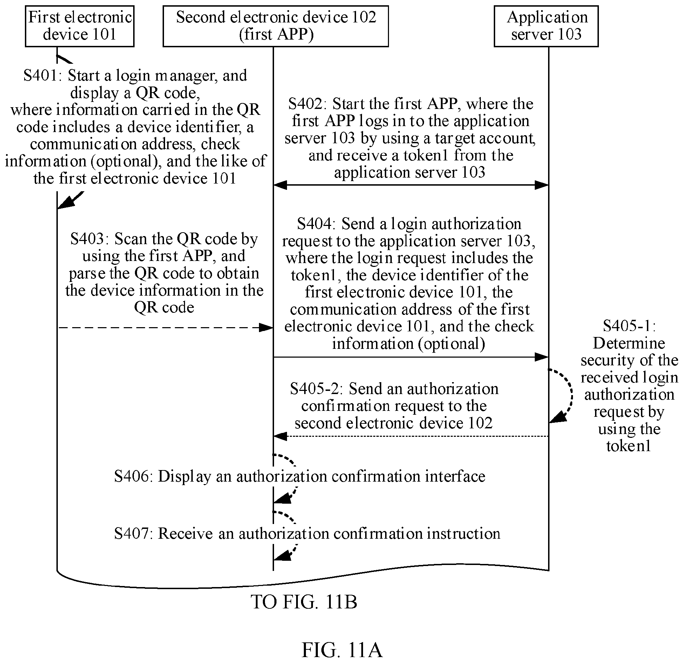

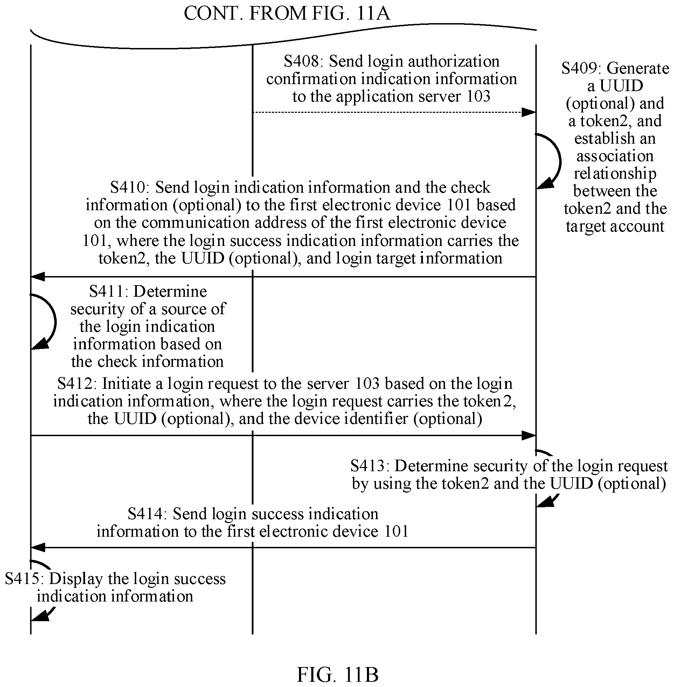

FIG. 11A and FIG. 11B are an example of a schematic flowchart of another communication method.

Step S401: A first electronic device 101 starts a login manager, and displays a QR code, where the QR code carries device information of the first electronic device 101.

For example, a communication address included in the device information herein includes an external network access URL (denoted as Login-Indication-Receiver-Out-URL) of an HTTP service enabled on the first electronic device 101 that is used to receive login indication information, for example, "http://external IP address of the first electronic device 101:8080/login-indication-receiver".

Step S402: A second electronic device 102 starts a first APP, where the first APP logs in to an application server 103 by using a target account, and receives a token1 from the application server 103.

Step S403: The second electronic device 102 scans, by using the first APP, the QR code displayed on the first electronic device 101, and parses the QR code to obtain the information in the QR code.

For technical principles of step S401 to step S403, refer to the related descriptions of step S301 to step S303 in FIG. 8a. Details are not described herein again.

Step S404: The second electronic device 102 sends a login authorization request to the application server 103, where the login authorization request includes the token1 of the first APP, a device identifier of the first electronic device 101, the communication address of the first electronic device 101, and check information.

It may be understood that, the second electronic device 102 provides the device identifier of the first electronic device 101 and the communication address of the first electronic device 101 for the application server 103, so that the application server 103 may directly communicate with the first electronic device 101 without forwarding by using the second electronic device 102.

The second electronic device 102 provides the check information for the application server 103. In this way, in subsequent interaction, the application server 103 sends a message carrying the check information to the first electronic device 101, and the first electronic device 101 may verify a valid identity of the message based on the check information, to perform a corresponding operation.

For a technical principle of step S404, refer to the related description of step S304 in FIG. 8a. Details are not described herein again.

Step S405-1: The application server 103 determines security of the received login authorization request by using the token1.

Step S405-2: The application server 103 sends an authorization confirmation request to the second electronic device 102.

For technical principles of step S405-1 and step S405-2, refer to the related descriptions of step S305-1 and step S305-2 in FIG. 8a. Details are not described herein again.

Step S406: The second electronic device 102 displays an authorization confirmation interface.

Step S407: The second electronic device 102 receives a confirmation instruction for the authorization confirmation interface. The confirmation instruction may be a tap operation of tapping a confirmation button by a user, or may be a voice instruction or the like.

Step S408: The second electronic device 102 sends login authorization confirmation indication information to the application server 103.

Step S405-1, step S405-2, and step S406 to step S408 are optional.

Step S409: The application server 103 generates a UUID (optional) and a token token2, and establishes an association relationship or a correspondence between the token2 and the target account.

For technical principles of step S406 to step S409, refer to the related descriptions of step S306 to step S309 in FIG. 8a. Details are not described herein again.

Step S410: The application server 103 sends the login indication information and the check information to the first electronic device 101 based on the communication address Login-Indication-Receiver-Out-URL of the first electronic device 101, for example, the application server 103 sends an HTTP POST request or an HTTP GET (obtain) request to the Login-Indication-Receiver-Out-URL, to transfer the login indication information and the check information, where the login indication information includes login target information and login credential information, and the login credential information includes the token2 and the UUID (optional).

For example, the HTTP POST request is:

```
          POST http://external IP address of the first
 electronic device 101:8080/login-indication-receiver
          Connection: ...
          User-Agent: ...
          ...
          Content-Type: application/json
          Content-Length: xxx
          {
              "check_code":............//check information
              "login_url":............//login target
information (login address) in the login indication information
                 "login_token":............//token2 in the login indication information
                 "UUID":............//UUID in the login indication information
          }
```

}For example, the HTTP GET request is:
GET https://external IP address of the first electronic device 101: 8080/login-indication-receiver? check_code=xxx &login_url=xxx&login_token=xxxxx&UUID=xxxxx.

Because the application server 103 obtains the check information and the communication address of the first electronic device 101 in step S404, the application server 103 directly sends the login indication information carrying the check information to the first electronic device 101, and the first electronic device 101 may verify a valid identity of the login success indication information based on the check information.

The login credential information includes the token2. Optionally, the login credential information further includes the UUID. It may be understood that, that the login credential information carries the token2 and the UUID is merely a specific implementation form, and belongs to a solution with a same conception of the present invention, provided that the login credential information includes information indicating that the application server 103 authorizes the first electronic device 101 to log in to the application server 103 by using the target account. As described in step 409, the login credential information has the association relationship with the target account.

In some embodiments, the login target information is information related to the application server 103.

Optionally, the login target information includes the login address of the application server 103, and the login address is an address (URL) used by the first electronic device 101 to access the application server 103 after the target account is logged in. When a client application (first APP) of the application server is not installed on the first electronic device 101, the first electronic device 101 may open the login address by using a browser. When the first APP is installed on the first electronic device 101, the first electronic device 101 may open the login address by using the first APP. Alternatively, when the first APP is installed on the first electronic device 101, the first electronic device 100 may determine, based on selection of the user, whether to open the login address by using the browser or open the login address by using the first APP.

Optionally, the login target information includes application information. The application information is a name or an identifier of the client application (first APP) corresponding to the application server 103, for example, an ID of the first APP or a name of the first APP. When the client application (first APP) of the application server is installed on the first electronic device 101, the first electronic device 101 may start the first APP based on the obtained application information (APP ID or APP Name).

Step S411: The first electronic device 101 determines security of a source of the login indication information based on the check information.

The first electronic device 101 receives the login indication information and the check information, and checks whether the check information is valid. If the check information is invalid, the login indication information is discarded. If the check information is valid, step S412 is performed: The first electronic device 101 initiates a login request to the application server 103 based on the login indication information, where the login request carries the token2, the UUID (optional), and the device identifier (optional).

Step S413: The application server 103 determines security of the login request by using the token2 and the UUID (optional).

Step S414: The application server 103 sends login success indication information to the first electronic device 101.

Step S415: The first electronic device 101 displays the login success indication information.

For technical principles of step S411 to step S415, refer to the related descriptions of step S312 to step S316 in FIG. 8a. Details are not described herein again.

In some embodiments, after the first electronic device 103 successfully logs in to the application server 103 (for example, after step S414), the application server 103 sends, to the second electronic device 102, the indication information indicating successful login of the first electronic device 103, and the second electronic device 102 may display corresponding prompt information. For example, the second electronic device 102 outputs a pop-up window, to indicate to the user that the application server 103 has been logged in on the first electronic device 101 by using the target account (user information for logging in to the application server 103 by the second electronic device 101). For another example, the second electronic device 102 displays a login identifier of another electronic device (first electronic device 101) on an application interface of the first APP.

In this embodiment of this application, the login manager is installed on the first electronic device 101, and the login manager of the first electronic device 101 provides the device information of the first electronic device 101. When the second electronic device 102 obtains the device information provided by the first electronic device 101, the second electronic device 102 requests login authorization from the application server 103. The application server 103 authorizes the first electronic device 101 to log in to the application server 103 by using the target account, and provides login success indication information for the first electronic device 101. The first electronic device 101 initiates the login request to the application server 103 based on the login success indication information, to display a login success interface. When the first APP is not installed on the first electronic device 101, the first electronic device 101 may display, by using the browser, a website corresponding to the first APP, and access the application server 103 by using the target account.

Another application may also be logged in by using the login manager. Logging in to another application is similar to logging in to the application server 103, and the first electronic device 101 does not need to install an application to be logged in to.

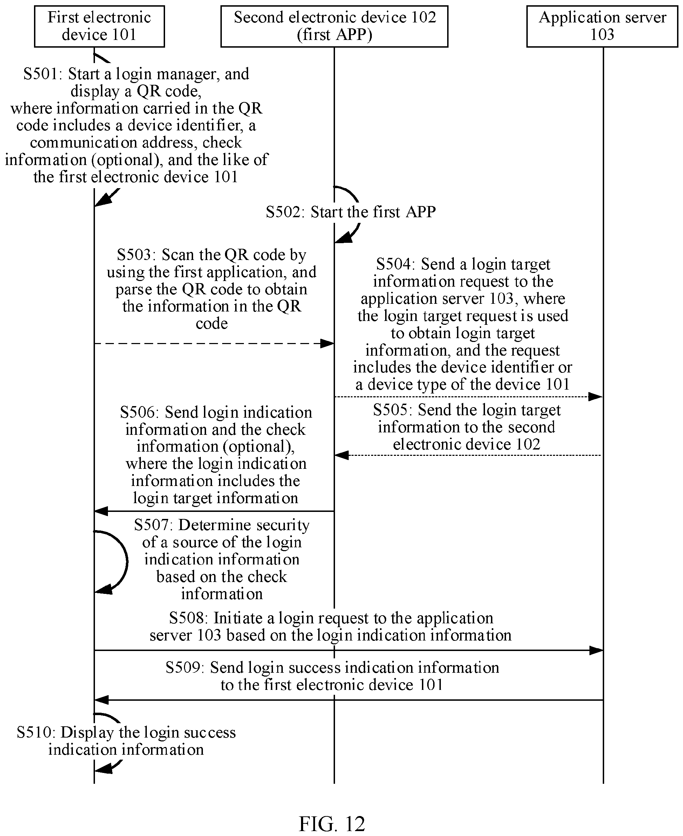

FIG. 12 is an example of a schematic flowchart of another communication method.

Step S501: A first electronic device 101 starts a login manager, and displays a QR code, where the QR code carries device information of the first electronic device 101.

For a technical principle of step S501, refer to the related description of step S301 in FIG. 8a. Details are not described herein again.

Step S502: A second electronic device 102 starts a first APP.

The second electronic device 102 starts the first APP. In this case, the second electronic device 102 does not log in to the application server 103, that is, accesses the application server 103 as a guest. A default URL of the application server 103 is built in the first APP.

In some embodiments, the second electronic device 102 may start a website of the first APP, or a page that has a scanning function.

Step S503: The second electronic device 102 scans, by using the first APP, the QR code displayed on the first electronic device 101, and parses the QR code to obtain information in the QR code.

For a technical principle of step S503, refer to the related description of step S303 in FIG. 8a. Details are not described herein again.

Step S504: The second electronic device 102 sends a login target information request to the application server 103, where the login target information request is used to obtain login target information, and the request includes a device identifier or a device type of the first electronic device 101.

Step S505: The application server 103 sends the login target information to the second electronic device 102 in response to the login target information request.

The login target information is information related to the application server 103. For a description of the login target information, refer to the related description in FIG. 10A and FIG. 10B of the foregoing embodiment. Details are not described herein again.

Step S504 and step S505 are optional.

In some embodiments, the login target information is provided by the second electronic device 102 for the first electronic device 101. Because the first APP is installed on the second electronic device 102, the login target information may include a default URL of the application server 103, and the login target information may further include application information of the first APP (for example, an ID of the first APP and a name of the first APP).

In a scenario in which application versions of first APPs that are adapted to the first electronic device 101 and the second electronic device 102 are consistent, for example, both the first electronic device 101 and the second electronic device 102 are mobile phones, the second electronic device 102 may provide the login target information for the first electronic device 101. In a scenario in which application versions of first APPs that are adapted to the first electronic device 101 and the second electronic device 102 are inconsistent, for example, the first electronic device 101 is a television, and the second electronic device 102 is a mobile phone, the login target information of the second electronic device 102 may not be applicable to the first electronic device 101. In this case, the application server 103 provides the login target information for the first electronic device 101.

Step S506: The second electronic device 102 sends login indication information and check information to the first electronic device 101, where the login indication information includes the login target information.

After the second electronic device 102 scans the QR code, the information obtained by parsing the QR code includes one or more of the device identifier of the first electronic device 101, a communication address of the first electronic device 101, the check information, and the like.

The second electronic device 102 does not log into the application server 103, that is, there is no user login information. Therefore, after the second electronic device 102 scans the QR code displayed on the first electronic device 101, the second electronic device 102 sends the login indication information and the check information to the first electronic device 101 based on the communication address of the first electronic device 101, where the login indication information includes the login target information.

Optionally, the login target information includes the URL of the application server 103. When a client application (first APP) of the application server is not installed on the first electronic device 101, the first electronic device 101 may open the address by using the browser. When the first APP is installed on the first electronic device 101, the first electronic device 101 may open the address by using the first APP. Alternatively, when the first APP is installed on the first electronic device 100, the first electronic device 101 may determine, based on selection of a user, whether to open the address by using the browser or open the address by using the first APP.

The URL of the application server 103 may be provided by the second electronic device 102, that is, the address built in the first APP described in step S502; or may be obtained from the application server 103, that is, obtained in step S505.

Optionally, the login target information includes the application information. The application information is a name or an identifier of the client application (first APP) corresponding to the application server 103, for example, the ID of the first APP or the name of the first APP. When the client application (first APP) of the application server is installed on the first electronic device 101, the first electronic device 101 may start the first APP based on the obtained application information (APP ID or APP Name).

Step S507: The first electronic device 101 determines security of a source of the login indication information based on the check information.

The first electronic device 101 receives the login indication information and the check information, and checks whether the check information is valid.

If the check information is invalid, the login start indication information is discarded.

If the check information is valid, step S508 is performed: The first electronic device 101 initiates a login request to the application server 103 based on the login indication information. The login request is used to request to log in to the application server 103.

Step S509: The application server 103 sends login success indication information to the first electronic device 101.

Step S510: The first electronic device 101 displays the login success indication information.

In this embodiment of this application, the login manager is installed on the first electronic device 101, and the login manager of the first electronic device 101 provides a QR code used for general login. When the second electronic device 102 scans the QR code by using the first APP, because the second electronic device 102 does not log in to the application server 103, the second electronic device 102 directly provides the default URL of the application server 103 to the first electronic device 101. Based on the default URL of the application server 103, the first electronic device 101 initiates an interface obtaining request to the application server 103, to display an interface of the first APP, and access the first APP as a guest. When the first APP is not installed on the first electronic device 101, the first electronic device 101 may access the website corresponding to the first APP as a guest.

Another application may also be accessed based on the QR code. Similar to accessing the first APP, the first electronic device 101 does not need to install an application to be accessed.

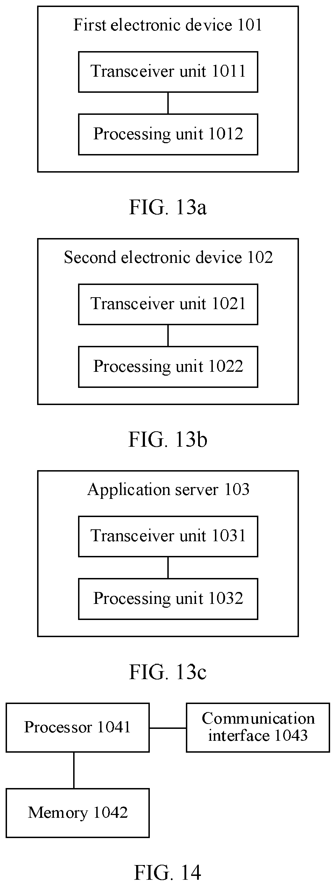

FIG. 13a is a diagram of a structure of a first electronic device 101 according to an embodiment of the present invention. The first electronic device 101 includes:
a transceiver unit 1011, configured to provide device information for another user equipment, where the device information indicates that the user equipment prepares to log in to a to-be-specified server; and
the transceiver unit 1011 is further configured to receive login indication information, where the login indication information indicates the user equipment to log in to an application server that is specified by a user by using the another user equipment; and
a processing unit 1012, configured to log in to the application server based on the login indication information.

FIG. 13b is a diagram of a structure of a second electronic device 102 according to an embodiment of the present invention. The second electronic device 102 includes:
a transceiver unit 1021, configured to obtain device information provided by another user equipment, where the device information indicates that the another user equipment prepares to log in to a to-be-specified server; and
a processing unit 1022, configured to trigger, based on the device information, the another user equipment to receive login indication information, where the login indication information indicates the another user equipment to log in to an application server that is specified by a user by using the user equipment.

FIG. 13c is a diagram of a structure of an application server 103 according to an embodiment of the present invention. The application server 103 includes:
a transceiver unit 1031, configured to receive a first request message sent by a second user equipment, where the first request message is used to request to authorize a first user equipment to log in to the application server; and
a processing unit 1032, configured to generate, by the application server, login indication information in response to the first request message, and enable the first user equipment to receive the login indication information, where the login indication information indicates the first user equipment to log in to the application server; and
the transceiver unit 1031 is further configured to receive a login request that is sent by the first user equipment based on the login indication information; and
the transceiver unit 1031 is further configured to send login success indication information to the first user equipment based on the login request.

FIG. 14 is a diagram of a structure of a communication apparatus according to an embodiment of the present invention. The apparatus includes at least one processor 1041, at least one memory 1042, and at least one communication interface 1043. In addition, the apparatus may further include a general component such as an antenna, and details are not described herein.

The apparatus may include a first electronic device 101, a second electronic device 102, and an application server 103.

The processor 1041 may be a general-purpose central processing unit (CPU), a microprocessor, an application-specific integrated circuit (application-specific integrated circuit, ASIC), or one or more integrated circuits configured to control program execution of the foregoing solution.

The communication interface 1043 is configured to communicate with another device or a communication network, such as an Ethernet, a radio access network (RAN), a core network, or a wireless local area network (Wireless Local Area Network, WLAN).

The memory 1042 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that can be accessed by a computer. However, this is not limited thereto. The memory may exist independently, and is connected to the processor through a bus. The memory may alternatively be integrated with the processor.

The memory 1042 is configured to store application code for executing the foregoing solution, and the processor 1041 controls the execution. The processor 1041 is configured to execute the application code stored in the memory 1042.

The code stored in the memory 1042 may be used to execute the communication methods provided in FIG. 10A and FIG. 10B to FIG. 12. Details are not described herein again.

An embodiment of this application further provides a computer-readable storage medium. All or some of the methods described in the foregoing method embodiments may be implemented by using software, hardware, firmware, or any combination thereof. If the methods are implemented through the software, a function may be stored on the computer-readable medium as one or more instructions or code or transmitted on the computer-readable medium. The computer-readable medium may include a computer storage medium and a communication medium, and may further include any medium that can transfer a computer program from one place to another. The storage medium may be any available medium accessible to a computer.

An embodiment of this application further provides a computer program product. All or some of the methods described in the foregoing method embodiments may be implemented by using software, hardware, firmware, or any combination thereof. If the methods are implemented through the software, all or part of the implementation may be implemented in the form of the computer program product. The computer program product includes one or more computer instructions. When the foregoing computer program instructions are loaded and executed on a computer, all or some of the procedures or functions described in the foregoing method embodiments are produced. The computer may be a general-purpose computer, a dedicated computer, a computer network, a network device, an electronic device, or another programmable apparatus.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or some of the procedures or functions described in embodiments of this application are produced. The computer may be a general-purpose computer, a dedicated computer, a computer network, or another programmable apparatus. The computer instructions may be stored in a computer-readable storage medium, or may be transmitted through the computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
providing, by a first user equipment, device information of the first user equipment for a second user equipment, wherein the device information indicates that the first user equipment prepares to log in to a to-be-specified server;
sending, by the second user equipment, a first request message to an application server based on the device information, wherein the first request message is used to request to authorize the first user equipment to log in to the application server;
generating, by the application server, login indication information in response to the first request message, and enabling the first user equipment to receive the login indication information, wherein the login indication information indicates the first user equipment to log in to the application server; and
logging in, by the first user equipment, to the application server based on the login indication information.

2. The method according to claim 1, wherein the device information comprises one or more of the following:
a device identifier, wherein the device identifier identifies the first user equipment;
check information, wherein the check information is generated by the first user equipment and is used to verify security of a source of the login indication information; and
a communication address, wherein the communication address is an address used by the first user equipment to receive the login indication information.

3. The method according to claim 1, wherein the providing, by a first user equipment, device information of the first user equipment for a second user equipment comprises:
presenting, by the first user equipment, the device information of the first user equipment as a QR code; and
scanning, by the second user equipment, the QR code to obtain the device information of the first user equipment.

4. The method according to claim 1, wherein the providing, by a first user equipment, device information of the first user equipment for a second user equipment comprises:
sending, by the first user equipment, a message comprising the device information to the second user equipment.

5. The method according to claim 1, wherein the login indication information comprises login target information, and the login target information is information related to the application server.

6. The method according to claim 5, wherein the login target information comprises a login address of the application server, and the logging in, by the first user equipment, to the application server based on the login indication information comprises:
triggering, by the first user equipment, a browser installed on the first user equipment to open the login address, to log in to the application server.

7. The method according to claim 5, wherein the login target information comprises application information, the application information is a name or an identifier of a client application corresponding to the application server, and the logging in, by the first user equipment, to the application server based on the login indication information comprises:
further triggering, by the first user equipment, the client application installed on the first user equipment to log in to the application server.

8. The method according to any one of claims 1 to 7, wherein the login indication information further comprises login credential information generated by the application server for the first user equipment, the login credential information comprises information indicating that the application server authorizes the first user equipment to log in to the application server by using a target account, and the target account is an account used by the second user equipment to log in to the application server.

9. The method according to claim 8, wherein the login credential information comprises a universally unique identifier UUID and/or a token token having an association relationship with the target account.

10. The method according to claim 8, wherein the logging in, by the first user equipment, to the application server based on the login indication information comprises:
sending, by the first user equipment, the login credential information to the application server; and
sending, by the application server, login success indication information to the first user equipment based on the login credential information.

11. The method according to claim 1, wherein the generating, by the application server, login indication information in response to the first request message, and enabling the first user equipment to receive the login indication information comprises:
generating, by the application server, the login indication information in response to the first request message, and sending the login indication information to the first user equipment.

12. The method according to claim 11, wherein the first request message comprises a device identifier and a communication address, the device identifier identifies the first user equipment, and the communication address is an address used by the first user equipment to receive the login indication information, and indicates the application server to send the login indication information to the first user equipment.

13. The method according to claim 1, wherein the generating, by the application server, login indication information in response to the first request message, and enabling the first user equipment to receive the login indication information comprises:
generating, by the application server, the login indication information in response to the first request message, and sending the login indication information to the second user equipment; and
sending, by the second user equipment, the login indication information to the first user equipment.

14. A communication method, wherein the method comprises:
providing, by a first user equipment, device information of the first user equipment for a second user equipment, wherein the device information indicates that the first user equipment prepares to log in to a to-be-specified server;
receiving, by the first user equipment, login indication information, wherein the login indication information indicates the first user equipment to log in to an application server that is specified by a user by using the second user equipment; and
logging in, by the first user equipment, to the application server based on the login indication information.

15. The method according to claim 14, wherein the device information comprises one or more of the following:
a device identifier, wherein the device identifier identifies the first user equipment;
check information, wherein the check information is generated by the first user equipment and is used to verify security of a source of the login indication information; and
a communication address, wherein the communication address is an address used by the first user equipment to receive the login indication information.

16. The method according to claim 14, wherein the providing, by a first user equipment, device information for a second user equipment comprises:
presenting, by the first user equipment, the device information as a QR code for the second user equipment to scan, wherein the QR code comprises the device information; or
sending, by the first user equipment, a message comprising the device information to the second user equipment.

17. The method according to claim 16, wherein the message comprising the device information is a near field communication NFC message.

18. The method according to claim 14, wherein the login indication information comprises login target information, and the login target information is information related to the application server.

19. The method according to claim 18, wherein the login target information comprises a login address of the application server, and the logging in, by the first user equipment, to the application server based on the login indication information comprises:
triggering, by the first user equipment, a browser installed on the first user equipment to open the login address, to log in to the application server.

20. The method according to claim 18, wherein the login target information comprises application information, the application information is a name or an identifier of a client application corresponding to the application server, and the logging in, by the first user equipment, to the application server based on the login indication information comprises:
triggering, by the first user equipment, the client application installed on the first user equipment to log in to the application server.

21. The method according to any one of claims 14 to 20, wherein the login indication information further comprises login credential information generated by the application server for the first user equipment, the login credential information comprises information indicating that the application server authorizes the first user equipment to log in to the application server by using a target account, and the target account is an account used by the second user equipment to log in to the application server.

22. The method according to claim 21, wherein the login credential information comprises a universally unique identifier UUID and/or a token token having an association relationship with the target account.

23. The method according to claim 21, wherein the logging in, by the first user equipment, to the application server based on the login indication information comprises:
sending, by the first user equipment, the login credential information to the application server, and logging in to the application server based on the login credential information.

24. The method according to any one of claims 14 to 23, wherein the receiving, by the first user equipment, login indication information comprises:
receiving, by the first user equipment, the login indication information from the second user equipment, or receiving, by the first user equipment, the login indication information from the application server.

25. A communication method, wherein the method comprises:
obtaining, by a second user equipment, device information of a first user equipment, wherein the device information indicates that the first user equipment prepares to log in to a to-be-specified server; and
triggering, by the second user equipment based on the device information, the first user equipment to receive login indication information, wherein the login indication information indicates the first user equipment to log in to an application server that is specified by a user by using the second user equipment.

26. The method according to claim 25, wherein the device information comprises a device identifier and a communication address, and the triggering, by the second user equipment based on the device information, the first user equipment to receive login indication information comprises:
sending, by the second user equipment, a first request message to the application server, wherein the first request message is used to request to authorize the first user equipment to log in to the application server, the first request message comprises the device identifier and the communication address, the device identifier identifies the first user equipment, and the communication address is an address used by the first user equipment to receive the login indication information, and indicates the application server to send the login indication information to the first user equipment.

27. The method according to claim 25, wherein the device information comprises a device identifier and a communication address, and the triggering, by the second user equipment based on the device information, the first user equipment to receive login indication information comprises:
sending, by the second user equipment, a first request message to the application server, wherein the first request message comprises the device identifier, and the device identifier identifies the first user equipment;
receiving, by the second user equipment, the login indication information that is sent by the application server in response to the first request message; and
sending, by the second user equipment, the login indication information to the first user equipment based on the communication address.

28. The method according to claim 25, wherein the obtaining, by a second user equipment, device information of a first user equipment comprises:
receiving, by the second user equipment, a message that is sent by the first user equipment and that comprises the device information; or
scanning, by the second user equipment, a QR code presented by the first user equipment, wherein information carried in the QR code comprises the device information.

29. The method according to claim 28, wherein the message comprising the device information is an NFC message.

30. The method according to claim 25, wherein the login indication information comprises login target information, and the login target information is information related to the application server.

31. The method according to claim 30, wherein the login target information comprises a login address of the application server; or
the login target information comprises a login address of the application server or application information, and the application information is a name or an identifier of a client application corresponding to the application server.

32. The method according to any one of claims 25 to 31, wherein the login indication information further comprises login credential information generated by the application server for the first user equipment, the login credential information comprises information indicating that the application server authorizes the first user equipment to log in to the application server by using a target account, and the target account is an account used by the second user equipment to log in to the application server.

33. The method according to claim 32, wherein the login credential information comprises a universally unique identifier UUID and/or a token token having an association relationship with the target account.

34. The method according to claim 25, wherein the method further comprises:
receiving, by the second user equipment, indication information that is sent by the application server and that indicates that the first user equipment successfully logs in to the application server.

35. The method according to claim 25, wherein the triggering, by the second user equipment, the first user equipment to receive login indication information comprises:
obtaining, by the second user equipment, a login address of the application server; and
sending, by the second user equipment, the login indication information to the first user equipment, wherein the login indication information comprises the login address.

36. The method according to any one of claims 25 to 35, wherein the device information comprises one or more of the following:
the device identifier, wherein the device identifier identifies the first user equipment;
check information, wherein the check information is generated by the first user equipment and is used to verify security of a source of the login indication information; and
the communication address, wherein the communication address is the address used by the first user equipment to receive the login indication information.

37. A communication method, wherein the method comprises:
receiving, by an application server, a first request message sent by a second user equipment, wherein the first request message is used to request to authorize a first user equipment to log in to the application server;
generating, by the application server, login indication information in response to the first request message, and enabling the first user equipment to receive the login indication information, wherein the login indication information indicates the first user equipment to log in to the application server;
receiving, by the application server, a login request that is sent by the first user equipment based on the login indication information; and
sending, by the application server, login success indication information to the first user equipment based on the login request.

38. The method according to claim 37, wherein the login indication information comprises login target information, and the login target information is information related to the application server.

39. The method according to claim 38, wherein the login target information comprises a login address of the application server; or the login target information comprises application information, and the application information is a name or an identifier of a client application corresponding to the application server.

40. The method according to any one of claims 37 to 39, wherein the login indication information further comprises login credential information generated by the application server for the first user equipment, the login credential information comprises information indicating that the application server authorizes the first user equipment to log in to the application server by using a target account, and the target account is an account used by the second user equipment to log in to the application server.

41. The method according to claim 40, wherein the login credential information comprises a universally unique identifier UUID and/or a token token having an association relationship with the target account.

42. The method according to claim 37, wherein the generating, by the application server, login indication information in response to the first request message, and enabling the first user equipment to receive the login indication information comprises:
generating, by the application server, the login indication information in response to the first request message, and sending the login indication information to the first user equipment.

43. The method according to claim 42, wherein the first request message comprises a device identifier and a communication address, the device identifier identifies the first user equipment, and the communication address is an address used by the first user equipment to receive the login indication information, and indicates the application server to send the login indication information to the first user equipment.

44. The method according to claim 37, wherein the generating, by the application server, login indication information in response to the first request message, and enabling the first user equipment to receive the login indication information comprises:
generating, by the application server, the login indication information in response to the first request message, and sending the login indication information to the second user equipment, so that the second user equipment sends the login indication information to the first user equipment.

45. The method according to claim 37, wherein the method further comprises:
sending, by the application server to the second user equipment, indication information indicating that the first user equipment successfully logs in to the application server.

46. A user equipment, wherein the user equipment comprises:
a transceiver unit, configured to provide device information for another user equipment, wherein the device information indicates that the user equipment prepares to log in to a to-be-specified server; and
the transceiver unit is further configured to receive login indication information, wherein the login indication information indicates the user equipment to log in to an application server that is specified by a user by using the another user equipment; and
a processing unit, configured to log in to the application server based on the login indication information.

47. A user equipment, wherein the user equipment comprises:
a transceiver unit, configured to obtain device information provided by another user equipment, wherein the device information indicates that the another user equipment prepares to log in to a to-be-specified server; and
a processing unit, configured to trigger, based on the device information, the another user equipment to receive login indication information, wherein the login indication information indicates the another user equipment to log in to an application server that is specified by a user by using the user equipment.

48. An application server, wherein the application server comprises:
a transceiver unit, configured to receive a first request message sent by a second user equipment, wherein the first request message is used to request to authorize a first user equipment to log in to the application server; and
a processing unit, configured to generate, by the application server, login indication information in response to the first request message, and enable the first user equipment to receive the login indication information, wherein the login indication information indicates the first user equipment to log in to the application server;
the transceiver unit is further configured to receive a login request that is sent by the first user equipment based on the login indication information; and
the transceiver unit is further configured to send login success indication information to the first user equipment based on the login request.

49. A user equipment, comprising a touchscreen, a memory, one or more processors, and one or more programs, wherein the one or more programs are stored in the memory, and when the one or more processors execute the one or more programs, the user equipment is enabled to implement the method according to any one of claims 14 to 24.

50. A user equipment, comprising a touchscreen, a memory, one or more processors, and one or more programs, wherein the one or more programs are stored in the memory, and when the one or more processors execute the one or more programs, the user equipment is enabled to implement the method according to any one of claims 15 to 36.

51. An application server, comprising a memory, one or more processors, and one or more programs, wherein the one or more programs are stored in the memory, and when the one or more processors execute the one or more programs, the application server is enabled to implement the method according to any one of claims 37 to 45.

52. A communication system, wherein the communication system comprises a first user equipment, a second user equipment, and an application server, the first user equipment is the user equipment according to claim 49, the second user equipment is the user equipment according to claim 50, and the application server is the application server according to claim 51.

53. A computer storage medium, comprising computer instructions, wherein when the computer instructions are run on a user equipment, the user equipment is enabled to perform the method according to any one of claims 14 to 45.

54. A computer program product, wherein when a computer reads and executes the computer program product, the computer is enabled to perform the method according to any one of claims 14 to 45.
